(19) **Europäisches Patentamt / European Patent Office / Office européen des brevets**

(11) **EP 1 473 858 B1**

(12) **FASCICULE DE BREVET EUROPEEN**

(45) Date de publication et mention de la délivrance du brevet:
**22.09.2010 Bulletin 2010/38**

(51) Int Cl.:
***H04B 10/18*** *(2006.01)*

(21) Numéro de dépôt: **04291002.6**

(22) Date de dépôt: **14.04.2004**

(54) **Module de compensation de dispersion chromatique**

Modul zur Kompensation der chromatischen Dispersion

Chromatic dispersion compensation modul

(84) Etats contractants désignés:
**AT BE BG CH CY CZ DE DK EE ES FI FR GB GR HU IE IT LI LU MC NL PL PT RO SE SI SK TR**

(30) Priorité: **29.04.2003 FR 0305223**

(43) Date de publication de la demande:
**03.11.2004 Bulletin 2004/45**

(73) Titulaire: **Draka Comteq B.V.**
**1083 HJ Amsterdam (NL)**

(72) Inventeurs:
• **Sillard, Pierre**
**78150 Le Chesnay (FR)**

• **Dany, Bruno**
**78600 Maisons-Laffitte (FR)**
• **Bertaina, Alain**
**75014 Paris (FR)**
• **Gorlier, Maxime**
**75008 Paris (FR)**

(74) Mandataire: **Blokland, Arie**
**Algemeen Octrooi- en Merkenbureau**
**P.O. Box 645**
**5600 AP Eindhoven (NL)**

(56) Documents cités:
EP-A- 0 685 947    EP-A- 1 246 380
US-A- 5 261 016    US-A1- 2002 048 439

**Description**

L'invention concerne le domaine des modules de compensation de dispersion chromatique. Pour les fibres optiques, on parlera indifféremment d'atténuation ou de coefficient d'atténuation.

Dans une partie des réseaux de transmission par fibre optique utilisant le multiplexage en longueur d'onde WDM (WDM signifie « wavelength division multiplexing » en langue anglo-saxonne), contenant des fibres optiques de ligne dans lesquelles se propage un signal optique, il n'existe pas de moyen de compensation de la dispersion chromatique de ces fibres optiques de ligne. En effet, lorsque le débit est faible, par exemple 2.5 Gbps par canal, il n'est pas nécessaire de compenser la dispersion chromatique des fibres optiques de ligne. Par contre, lorsque le débit augmente et devient élevé, par exemple 10 Gbps par canal, une compensation à la fois de la dispersion chromatique et de la pente de dispersion chromatique des fibres optiques de ligne deviennent nécessaires. Généralement, la fibre optique de ligne présente une dispersion chromatique et une pente de dispersion chromatique qui sont positives. Par conséquent, la fibre optique de compensation de dispersion chromatique présentera généralement une dispersion chromatique et une pente de dispersion chromatique qui sont négatives. La fibre optique de compensation de dispersion chromatique peut être intégrée dans un module de compensation de dispersion chromatique. La plage spectrale à compenser au niveau dispersion chromatique peut notamment inclure une ou plusieurs des bandes C, L et S.

Le signal optique va se propager dans la fibre optique de compensation de dispersion chromatique. Lors de sa propagation dans la fibre optique de compensation de dispersion chromatique, le signal optique est susceptible de subir des détériorations comme par exemple une diminution du rapport signal à bruit et ou une augmentation des effets non linéaires. Pour compenser la dispersion chromatique d'un tronçon de fibre optique de ligne mesurant généralement plusieurs dizaines de kilomètres, le module de compensation de dispersion chromatique présente des pertes d'insertion qui sont généralement relativement élevées, de l'ordre de plusieurs dB. En raison de l'importance de ses pertes d'insertion, le module de compensation de dispersion chromatique est généralement placé au milieu d'un dispositif d'amplification à double étage, c'est-à-dire entre deux amplificateurs.

Pour que ce dispositif d'amplification à double étage présente un bon rapport signal à bruit optique et une bonne platitude spectrale de gain, ce dispositif d'amplification à double étage présente d'une part un gain du premier amplificateur qui est élevé, ce qui donne une puissance optique en sortie de ce premier amplificateur qui est élevée, et d'autre part un niveau de pertes entre les deux amplificateurs qui est fixe.

La fibre optique de compensation de dispersion chromatique intégrée dans le module de compensation de dispersion chromatique est une fibre optique monomode laquelle présente une faible surface effective comprise entre $10\mu m^2$ et $35\mu m^2$, ce qui la rend très fortement sensible aux effets non linéaires. Il est intéressant de limiter la puissance optique d'entrée dans cette fibre optique monomode de compensation de dispersion chromatique afin de préserver une bonne qualité de transmission du signal optique. Pour cela, un atténuateur est placé entre le premier amplificateur et le module de compensation de dispersion chromatique. Cet atténuateur contrôle également la platitude spectrale de gain. Cet atténuateur peut être remplacé par un composant de routage de longueurs d'ondes ou par tout autre composant optique qui a des pertes et qui peut donc, comme l'atténuateur, limiter la puissance optique d'entrée dans le module de compensation de dispersion chromatique.

Le problème est de réaliser un module de compensation de dispersion chromatique présentant la meilleure qualité possible, tout en limitant son coût, c'est-à-dire le meilleur rapport qualité prix possible pour le module de compensation de dispersion chromatique. Comment évaluer la qualité, le coût et le rapport qualité prix d'un module de compensation de dispersion chromatique ?

Selon un premier art antérieur, il est connu d'essayer de diminuer le plus possible les pertes d'insertion du module de compensation, et pour cela notamment d'augmenter le plus possible le facteur de mérite de la fibre optique de compensation, ce qui malheureusement augmente beaucoup le coût de réalisation de la fibre optique de compensation et par conséquent du module de compensation. Au fur et à mesure que la qualité du module de compensation augmente, le prix augmente encore plus vite, et par conséquent le rapport qualité prix se dégrade.

Selon un deuxième art antérieur, décrit par exemple dans l'article « Design optimization of dispersion compensating fiber for NZ-DSF considering nonlinearity and packaging performance » écrit par « T.Kato, M.Hirano, K. Fukuda, A. Tada, M. Onishi et M. Nishimura » et présenté à la conférence « OFC 2001 », il est connu d'essayer de diminuer le plus possible la phase non linéaire du module de compensation, et pour cela notamment d'augmenter le plus possible le facteur de mérite de la fibre optique de compensation, ce qui malheureusement augmente beaucoup le coût de réalisation de la fibre optique de compensation et par conséquent du module de compensation. Au fur et à mesure que la qualité du module de compensation augmente, le prix augmente encore plus vite, et par conséquent le rapport qualité prix se dégrade.

Dans l'art antérieur, il existe des modules de compensation médiocres à prix raisonnables et de bons modules de compensation à prix exorbitants. Le but de l'invention est d'améliorer le rapport qualité prix des modules de compensation, et notamment de proposer de bons modules à prix raisonnables.

Les méthodes d'amélioration de la qualité d'un module de compensation selon l'art antérieur reposent sur l'amélioration unilatérale d'un paramètre partiellement représentatif de la qualité du module de compensation. Cette amélioration unilatérale d'un seul paramètre partiellement représentatif de la qualité du module de compensation, que ce soit les pertes d'insertion ou bien la phase non linéaire, a deux conséquences. Tout d'abord elle augmente le prix du module de compensation. Ensuite elle a tendance à dégrader l'autre paramètre partiellement représentatif de la qualité du module de compensation, ce qui augmente pas ou peu ou moins que souhaité, la qualité du module de compensation. Certes, une augmentation très importante du facteur de mérite de la fibre optique de compensation se traduira toujours par une augmentation plus ou moins importante de la qualité du module de compensation, mais aussi par un augmentation très importante du coût du module de compensation, d'où une dégradation du rapport qualité prix du module de compensation.

La méthode d'amélioration de la qualité d'un module de compensation selon l'invention est totalement différente. Tout d'abord cette méthode crée un critère de qualité globalement représentatif de la qualité d'un module de compensation, qui intègre, en les pondérant, les contributions d'une part des pertes d'insertion et d'autre part des effets non linéaires. La contribution des pertes d'insertion correspond aux pertes d'insertion classiques avec la différence de les ramener à une compensation complète de la fibre optique de ligne, tandis que la contribution des effets non linéaires est obtenue par l'intermédiaire d'un critère de non linéarité lié à la phase non linéaire mais distinct de la phase non linéaire. Ce critère de non linéarité est obtenue par une simplification astucieuse de la phase non linéaire prenant en compte l'aspect constant du niveau de pertes entre les deux amplificateurs du dispositif d'amplification à double étage. D'une part, l'optimisation de ce critère de qualité original peut être réalisée à facteur de mérite de la fibre optique de compensation choisi constant, ce qui permet d'améliorer la qualité du module de compensation à coût constant, donc d'améliorer le rapport qualité prix du module de compensation. Pour cela, de manière tout à fait originale et un peu paradoxale, à facteur de mérite constant de la fibre optique de compensation, l'invention montre qu'il est avantageux d'augmenter l'atténuation de la fibre optique de compensation. En effet, à facteur de mérite constant, les pertes d'insertion restent identiques tandis que l'augmentation de l'atténuation améliore beaucoup le critère de non linéarité. Le critère de qualité montre également de manière encore plus paradoxale qu'il peut être intéressant de dégrader un peu le facteur de mérite de la fibre optique et par conséquent les pertes d'insertion, à condition de diminuer la dispersion chromatique négative de la fibre optique de compensation tout en diminuant le facteur de mérite de la fibre optique de compensation, ce qui revient à augmenter beaucoup l'atténuation de la fibre optique de compensation, dans la mesure où cela permet d'améliorer beaucoup le critère de non linéarité et ainsi de compenser largement la dégradation des pertes d'insertion. Ceci est toujours avantageux, mais spécialement dans le cas d'un dispositif d'amplification à double étage comme présenté ci-dessus, car dans ce cas la légère dégradation des pertes d'insertion ne se traduit par aucune dégradation du signal optique, mais seulement par une atténuation moindre de l'atténuateur, donc par un signal d'entrée dans la fibre optique de compensation plus élevé, ce qui est très bien supporté par la fibre optique de compensation puisque celle-ci a une résistance aux effets non linéaires qui a été nettement améliorée. L'invention a également créé un critère de rapport qualité prix qui intègre le surcoût entraîné par une augmentation du facteur de mérite de la fibre optique de compensation, ce qui permet de vérifier que toute augmentation du facteur de mérite de la fibre optique de compensation se traduit par une augmentation comparable de la qualité du module de compensation. Pour cela, l'augmentation de facteur de mérite, à condition qu'elle se réalise beaucoup plus par une diminution de la dispersion chromatique négative de la fibre optique de compensation que par une diminution de l'atténuation de la fibre optique de compensation, et de préférence lorsque cette augmentation du facteur de mérite de la fibre optique de compensation se réalise à la fois par une diminution de la dispersion chromatique de la fibre optique de compensation et par une augmentation importante de l'atténuation de la fibre optique de compensation, permet d'améliorer la qualité bien sûr, mais également le rapport qualité prix, c'est-à-dire d'augmenter nettement plus la qualité que le prix.

L'invention propose donc un procédé de conception de module de compensation, ainsi que deux modules de compensation, l'un adapté à la compensation d'une fibre optique de ligne monomode standard (« standard SMF » pour « standard single-mode fiber » en langue anglo-saxonne) et l'autre adapté à la compensation d'une fibre optique de ligne monomode à dispersion décalée non nulle (« NZ-DSF » pour « non-zero dispersion-shifted fiber » en langue anglo-saxonne), c'est-à-dire à dispersion décalée par rapport à la fibre optique monomode standard et à dispersion non nulle à la longueur d'onde de 1550nm.

Selon l'invention, il est prévu un procédé de conception d'un module de compensation de dispersion chromatique, ledit module étant destiné à comporter, un boîtier comprenant une borne d'entrée et une borne de sortie, une ligne optique de compensation de dispersion chromatique comprenant une ou plusieurs fibres optiques monomodes de compensation de dispersion chromatique en série, ne comprenant aucune fibre optique multimode HOM, étant située dans le boîtier et reliant la borne d'entrée à la borne de sortie, ledit module étant destiné à être introduit, par l'intermédiaire des bornes d'entrée et de sortie, dans une ligne de transmission comprenant une fibre optique de ligne monomode destinée à transmettre des informations dans un domaine spectral d'utilisation, la borne d'entrée introduisant dans la ligne de transmission une perte d'entrée $\Gamma_{in}$ exprimée en dB, la borne de sortie introduisant dans la ligne de transmission une perte de sortie $\Gamma_{out}$ exprimée en dB, d'éventuelles connexions supplémentaires entre fibres optiques de compensation introduisant ensemble dans la ligne de transmission une perte de connexion $\Gamma_{inter}$ exprimée en dB, la fibre optique de compensation ou l'ensemble des fibres optiques de compensation en série présentant, à une longueur d'onde valant 1550nm, plusieurs paramètres moyens dont, un coefficient moyen d'atténuation $\alpha_{DCF}$ exprimé en dB/km, une dispersion chromatique moyenne négative $D_{DCF}$ exprimée en ps/nm-km, une pente de dispersion chromatique moyenne négative $S_{DCF}$ exprimée en ps/nm$^2$-km, un rapport moyen dispersion chromatique sur pente de dispersion chromatique valant $D_{DCF}/S_{DCF}$ et étant exprimé en nm, un facteur de mérite moyen $FOM_{DCF}$ valant - $D_{DCF}/\alpha_{DCF}$ et étant exprimé en ps/nm-dB, une surface effective moyenne $A_{eff}$ exprimée en $\mu m^2$, un coefficient moyen $n_2$ du deuxième ordre de l'indice de réfraction en fonction de l'intensité exprimé en $10^{-20}m2/W$, le rapport moyen dispersion chromatique sur pente de dispersion chromatique valant le rapport entre la dispersion chromatique moyenne et la pente de dispersion chromatique moyenne, le facteur de mérite moyen valant l'opposé du rapport entre la dispersion chromatique moyenne et le coefficient moyen d'atténuation, le coefficient moyen d'atténuation dans le cas d'une unique fibre optique de compensation étant confondu avec le coefficient d'atténuation correspondant de ladite fibre optique unique de compensation, et le coefficient moyen d'atténuation dans le cas d'un ensemble de fibres optiques de compensation en série valant la somme entre d'une part la moyenne arithmétique des coefficients d'atténuation correspondants des différentes fibres optiques de compensation ayant été pondérés par les longueurs respectives desdites différentes fibres optiques de compensation et d'autre part le rapport entre la perte de connexion et la somme des longueurs desdites différentes fibres optiques de compensation, chacun desdits autres paramètres moyens dans le cas d'une unique fibre optique de compensation étant confondu avec le paramètre correspondant de ladite fibre optique unique de compensation, et chacun desdits autres paramètres moyens dans le cas d'un ensemble de fibres optiques de compensation en série valant la moyenne arithmétique des paramètres correspondants des différentes fibres optiques de compensation ayant été pondérés par les longueurs respectives desdites différentes fibres optiques de compensation, ledit module étant destiné à présenter des pertes d'insertion IL exprimées en dB, avec $IL = \dfrac{D_{DCM}}{D_{DCF}} \cdot \alpha_{DCF} + \Gamma_{in} + \Gamma_{out}$ et avec $D_{DCM}$ représentant l'opposé de la dispersion cumulée de la fibre optique de ligne, ledit module étant destiné à présenter un critère de non linéarité NLC représentant les effets de la phase non linéaire et étant exprimé en $10^{-6}$km/W-dB,

avec $NLC = \dfrac{100 \cdot n_2 \cdot (1 - 10^{\frac{D_{DCM}}{10 \cdot FOM_{DCF}}})}{A_{eff} \cdot \alpha_{DCF} \cdot 10^{\frac{\Gamma_{in}}{10}}}$, ledit module étant destiné à présenter un critère de qualité CQ exprimé en dB, avec $CQ = IL + 10\log NLC$, ledit procédé de conception comprenant une étape d'optimisation dudit module, ladite étape d'optimisation consistant à diminuer le critère de qualité, à facteur de mérite moyen choisi constant, en augmentant l'atténuation moyenne.

Selon l'invention, pour compenser une fibre optique de ligne monomode standard, il est aussi prévu un module de compensation de dispersion chromatique comportant, un boîtier comprenant une borne d'entrée et une borne de sortie, une ligne optique de compensation de dispersion chromatique comprenant une ou plusieurs fibres optiques monomodes de compensation de dispersion chromatique en série, ne comprenant aucune fibre optique multimode HOM, étant située dans le boîtier et reliant la borne d'entrée à la borne de sortie, le module étant destiné à être introduit, par l'intermédiaire des bornes d'entrée et de sortie, dans une ligne de transmission comprenant une fibre optique de ligne monomode standard destinée à transmettre des informations dans un domaine spectral d'utilisation, la borne d'entrée introduisant dans la ligne de transmission une perte d'entrée $\Gamma_{in}$ exprimée en dB, la borne de sortie introduisant dans la ligne de transmission une perte de sortie $\Gamma_{out}$ exprimée en dB, d'éventuelles connexions supplémentaires entre fibres optiques de compensation introduisant ensemble dans la ligne de transmission une perte de connexion $\Gamma_{inter}$ exprimée en dB, la fibre optique de compensation ou l'ensemble des fibres optiques de compensation en série présentant, à une longueur d'onde valant 1550nm, plusieurs paramètres moyens dont, un coefficient moyen d'atténuation $\alpha_{DCF}$ exprimé en dB/km, une dispersion chromatique moyenne négative $D_{DCF}$ exprimée en ps/nm-km, une pente de dispersion chromatique moyenne négative $S_{DCF}$ exprimée en ps/nm$^2$-km, un rapport moyen dispersion chromatique sur pente de dispersion chromatique valant $D_{DCF}/S_{DCF}$ et étant exprimé en nm, un facteur de mérite moyen $FOM_{DCF}$ valant - $D_{DCF}/\alpha_{DCF}$ et étant exprimé en ps/nm-dB, une surface effective moyenne $A_{eff}$ exprimée en $\mu m^2$, un coefficient moyen $n_2$ du deuxième ordre de l'indice de réfraction en fonction de l'intensité exprimé en $10^{-20}m2/W$, le rapport moyen dispersion chromatique sur pente de dispersion chromatique valant le rapport entre la dispersion chromatique moyenne et la pente de dispersion chromatique moyenne, le facteur de mérite moyen valant l'opposé du rapport entre la dispersion chromatique moyenne et le coefficient moyen d'atténuation, le coefficient moyen d'atténuation dans le cas d'une unique fibre optique de compensation étant confondu avec le coefficient d'atténuation correspondant de ladite fibre optique unique de compensation, et le coefficient moyen d'atténuation dans le cas d'un ensemble de fibres optiques de compensation en série valant la somme entre d'une part la moyenne arithmétique des coefficients d'atténuation correspondants des différentes fibres optiques de compensation ayant été pondérés par les longueurs respectives desdites différentes fibres optiques de compensation et d'autre part le rapport entre la perte de connexion et la somme des longueurs desdites différentes fibres optiques de compensation, chacun desdits autres paramètres moyens dans le cas d'une unique fibre optique de compensation étant confondu avec le paramètre correspondant de ladite fibre optique unique de compensation, et chacun desdits autres paramètres moyens dans le cas d'un ensemble de fibres optiques de compensation en série valant la moyenne arithmétique des paramètres correspondants des différentes fibres optiques de compensation ayant été pondérés par les longueurs respectives desdites différentes fibres optiques de compensation, le module présentant des pertes d'insertion IL exprimées en dB, avec $IL = \frac{D_{DCM}}{D_{DCF}} \cdot \alpha_{DCF} + \Gamma_{in} + \Gamma_{out}$ et avec D$_{DCM}$ =-

1360ps/nm, le module présentant un critère de non linéarité NLC représentant les effets de la phase non linéaire et étant exprimé en 10$^{-6}$km/W-dB, avec $NLC = \frac{100 \cdot n_2 \cdot (1 - 10^{\frac{D_{DCM}}{10 \cdot FOM_{DCF}}})}{A_{eff} \cdot \alpha_{DCF} \cdot 10^{\frac{\Gamma_{in}}{10}}}$, le module présentant un critère de qualité CQ exprimé en dB, avec *CQ = IL* + 10 log*NLC,* le module présentant un critère de rapport qualité prix CQ2 exprimé en dB, avec *CQ2=CQ+B*log(*FOM$_{DCF}$*) et avec B=18, la fibre optique de compensation ou l'ensemble des fibres optiques de compensation en série présentant, premièrement une dispersion chromatique moyenne inférieure à -130ps/nm-km, deuxièmement un rapport moyen dispersion chromatique sur pente de dispersion chromatique compris entre 240nm et 400nm, troisièmement, pour un facteur de mérite moyen donné, une atténuation moyenne suffisamment élevée pour que d'une part le critère de qualité soit inférieur à 20.5dB et d'autre part le critère de rapport qualité prix soit inférieur à 61.3dB.

Selon l'invention, pour compenser une fibre optique de ligne monomode à dispersion décalée non nulle, il est aussi prévu un module de compensation de dispersion chromatique comportant, un boîtier comprenant une borne d'entrée et une borne de sortie, une ligne optique de compensation de dispersion chromatique comprenant une ou plusieurs fibres optiques monomodes de compensation de dispersion chromatique en série, ne comprenant aucune fibre optique multimode HOM, étant située dans le boîtier et reliant la borne d'entrée à la borne de sortie, le module étant destiné à être introduit, par l'intermédiaire des bornes d'entrée et de sortie, dans une ligne de transmission comprenant une fibre optique de ligne monomode à dispersion décalée non nulle à 1550nm et destinée à transmettre des informations dans un domaine spectral d'utilisation, la borne d'entrée introduisant dans la ligne de transmission une perte d'entrée $\Gamma_{in}$ exprimée en dB, la borne de sortie introduisant dans la ligne de transmission une perte de sortie $\Gamma_{out}$ exprimée en dB, d'éventuelles connexions supplémentaires entre fibres optiques de compensation introduisant ensemble dans la ligne de transmission une perte de connexion $\Gamma_{inter}$ exprimée en dB, la fibre optique de compensation ou l'ensemble des fibres optiques de compensation en série présentant, à une longueur d'onde valant 1550nm, plusieurs paramètres moyens dont, un coefficient moyen d'atténuation $\alpha_{DCF}$ exprimé en dB/km, une dispersion chromatique moyenne négative D$_{DCF}$ exprimée en ps/nm-km, une pente de dispersion chromatique moyenne négative S$_{DCF}$ exprimée en ps/nm$^2$-km, un rapport moyen dispersion chromatique sur pente de dispersion chromatique valant D$_{DCF}$/ S$_{DCF}$ et étant exprimé en nm, un facteur de mérite moyen FOM$_{DCF}$ valant - D$_{DCF}$/$\alpha_{DCF}$ et étant exprimé en ps/nm-dB, une surface effective moyenne A$_{eff}$ exprimée en $\mu$m$^2$, un coefficient moyen n$_2$ du deuxième ordre de l'indice de réfraction en fonction de l'intensité exprimé en 10$^{-20}$m$^2$/W, le rapport moyen dispersion chromatique sur pente de dispersion chromatique valant le rapport entre la dispersion chromatique moyenne et la pente de dispersion chromatique moyenne, le facteur de mérite moyen valant l'opposé du rapport entre la dispersion chromatique moyenne et le coefficient moyen d'atténuation, le coefficient moyen d'atténuation dans le cas d'une unique fibre optique de compensation étant confondu avec le coefficient d'atténuation correspondant de ladite fibre optique unique de compensation, et le coefficient moyen d'atténuation dans le cas d'un ensemble de fibres optiques de compensation en série valant la somme entre d'une part la moyenne arithmétique des coefficients d'atténuation correspondants des différentes fibres optiques de compensation ayant été pondérés par les longueurs respectives desdites différentes fibres optiques de compensation et d'autre part le rapport entre la perte de connexion et la somme des longueurs desdites différentes fibres optiques de compensation, chacun desdits autres paramètres moyens dans le cas d'une unique fibre optique de compensation étant confondu avec le paramètre correspondant de ladite fibre optique unique de compensation, et chacun desdits autres paramètres moyens dans le cas d'un ensemble de fibres optiques de compensation en série valant la moyenne arithmétique des paramètres correspondants des différentes fibres optiques de compensation ayant été pondérés par les longueurs respectives desdites différentes fibres optiques de compensation, le module présentant des pertes d'insertion IL exprimées en dB,

avec $IL = \dfrac{D_{DCM}}{D_{DCF}} \cdot \alpha_{DCF} + \Gamma_{in} + \Gamma_{out}$ et avec $D_{DCM}$ =-680ps/nm, le module présentant un critère de non linéarité NLC représentant les effets de la phase non linéaire et étant exprimé en $10^{-6}$km/W-dB,

avec $NLC = \dfrac{100 \cdot n_2 \cdot (1 - 10^{\frac{D_{DCM}}{10 \cdot FOM_{DCF}}})}{A_{eff} \cdot \alpha_{DCF} \cdot 10^{\frac{\Gamma_{in}}{10}}}$, le module présentant un critère de qualité CQ exprimé en dB, avec

$CQ=IL+10\log NLC$, le module présentant un critère de rapport qualité prix CQ2 exprimé en dB, avec $CQ2=CQ+B\log$ ($FOM_{DCF}$) et avec B=23, la fibre optique de compensation ou l'ensemble des fibres optiques de compensation en série présentant, premièrement une dispersion chromatique moyenne inférieure à -115 ps/nm-km, deuxièmement, pour un facteur de mérite moyen donné, une atténuation moyenne suffisamment élevée pour que d'une part le critère de qualité soit inférieur à 18dB et d'autre part le critère de rapport qualité prix soit inférieur à 66.6dB.

Les critères de qualité et de rapport qualité prix, quoique moins pertinents dans le cadre d'une utilisation avec un dispositif d'amplification et de compensation autre que le dispositif d'amplification et de compensation à double étage présenté ci-dessus, restent valables et utiles. L'invention n'est pas limitée à une utilisation dans le cadre d'un dispositif d'amplification et de compensation à double étage du type de celui présenté ci-dessus.

L'invention sera mieux comprise et d'autres particularités et avantages apparaîtront à l'aide de la description ci-après et des dessins joints, donnés à titre d'exemples, où :

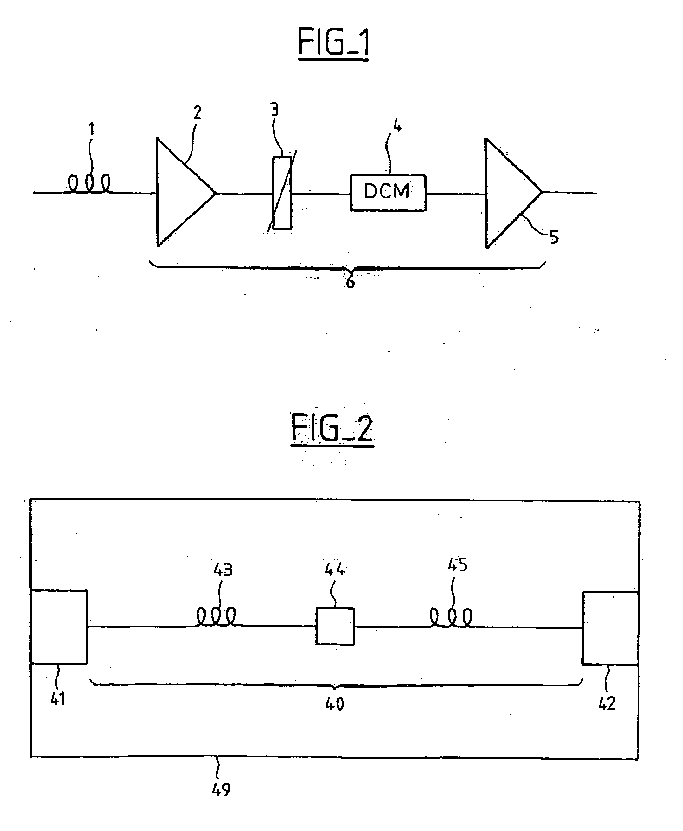

- la figure 1 représente schématiquement un exemple de ligne de transmission intégrant un module de compensation selon l'invention ;
- la figure 2 représente schématiquement un exemple de module de compensation selon l'invention ;

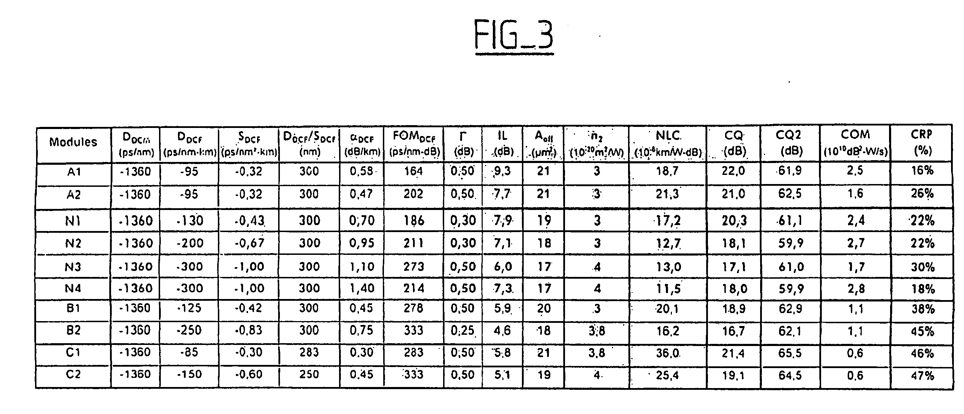

- la figure 3 représente schématiquement un tableau de comparaison des performances relatives entre des modules de compensation selon l'art antérieur et des exemples de module de compensation selon l'invention, dans le cas d'une compensation d'une fibre optique de ligne monomode standard ;

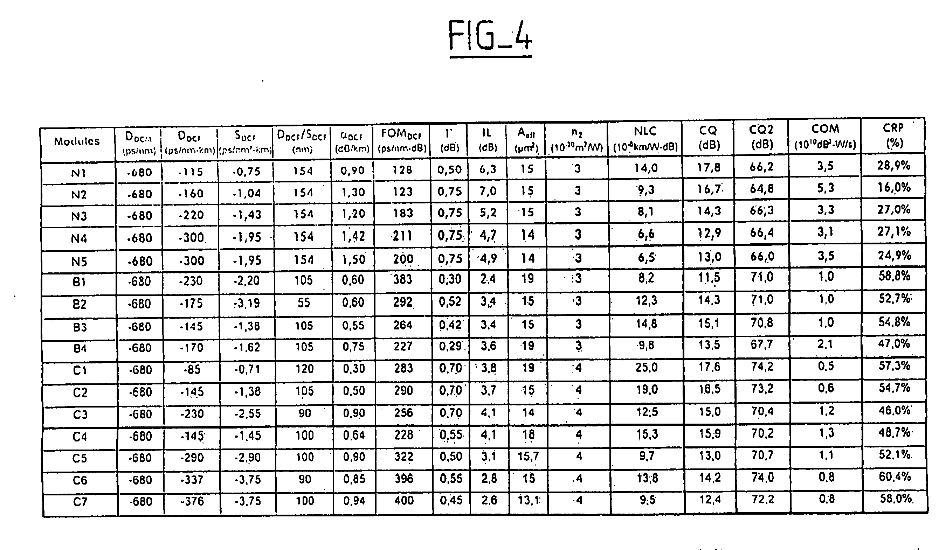

- la figure 4 représente schématiquement un tableau de comparaison des performances relatives entre des modules de compensation selon l'art antérieur et des exemples de module de compensation selon l'invention, dans le cas d'une compensation d'une fibre optique de ligne monomode à dispersion décalée non nulle ;

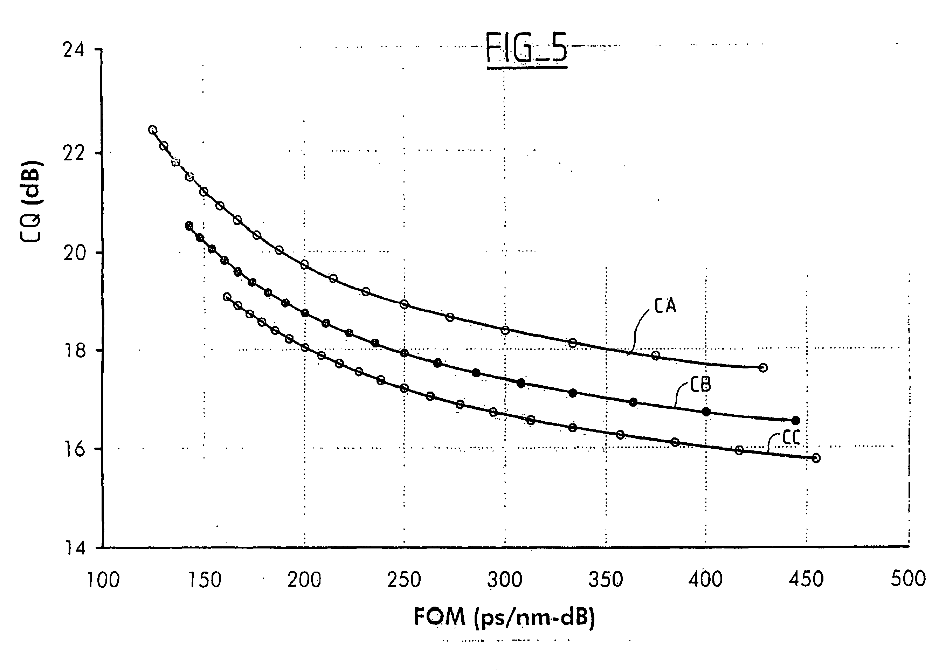

- la figure 5 représente schématiquement une famille de courbes montrant les variations du critère de qualité en fonction du facteur de mérite de la fibre optique de compensation, à dispersion chromatique de la fibre optique de compensation choisie constante, dans le cas d'une compensation d'une fibre optique de ligne monomode standard ;

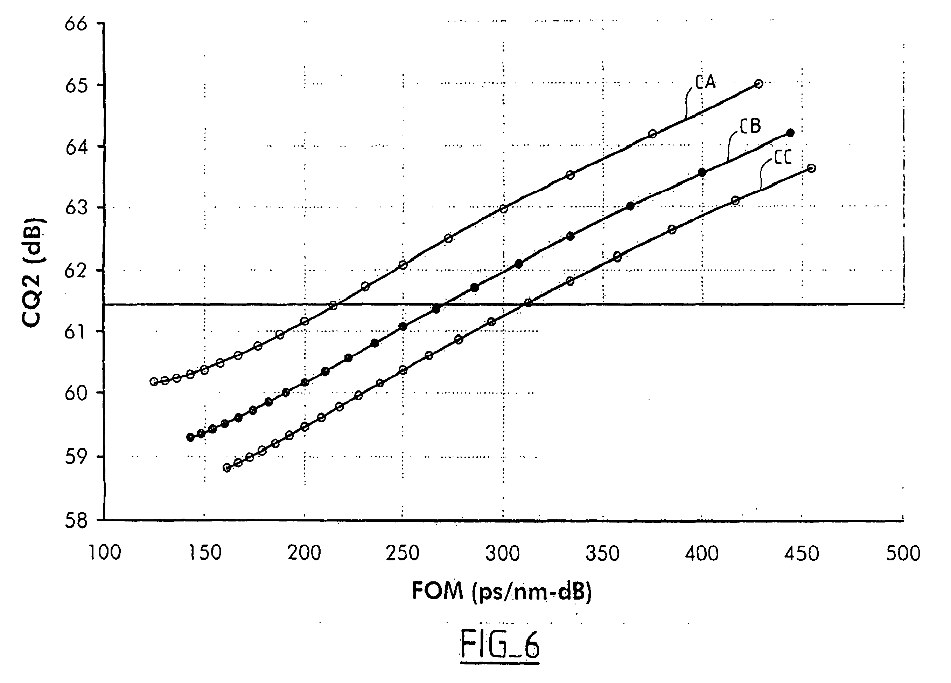

- la figure 6 représente schématiquement une famille de courbes montrant les variations du critère de rapport qualité prix en fonction du facteur de mérite de la fibre optique de compensation, à dispersion chromatique de la fibre optique de compensation choisie constante, dans le cas d'une compensation d'une fibre optique de ligne monomode standard ;

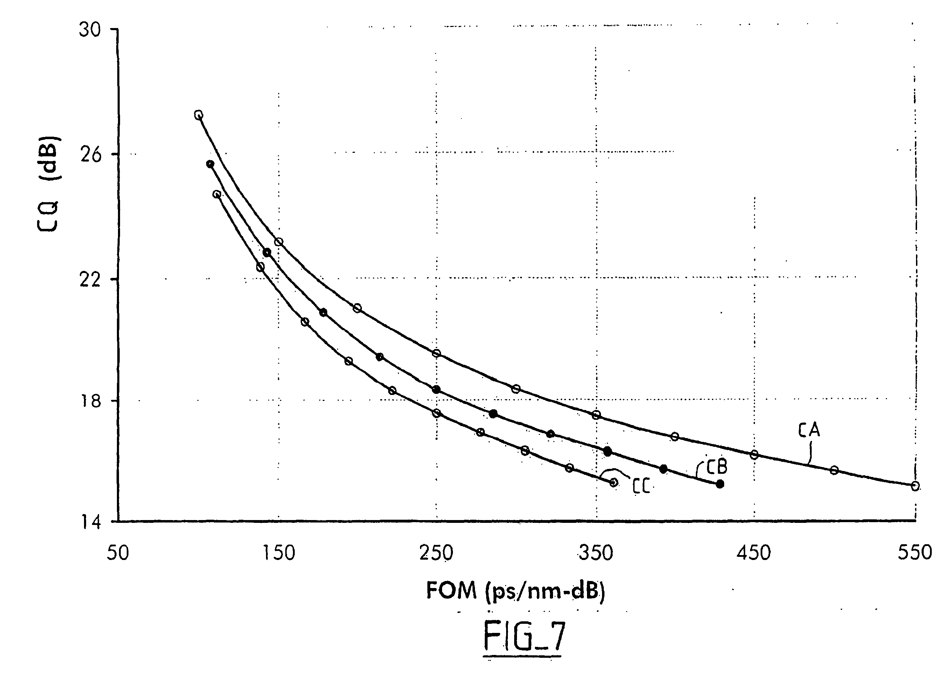

- la figure 7 représente schématiquement une famille de courbes montrant les variations du critère de qualité en fonction du facteur de mérite de la fibre optique de compensation, à atténuation de la fibre optique de compensation choisie constante, dans le cas d'une compensation d'une fibre optique de ligne monomode standard ;

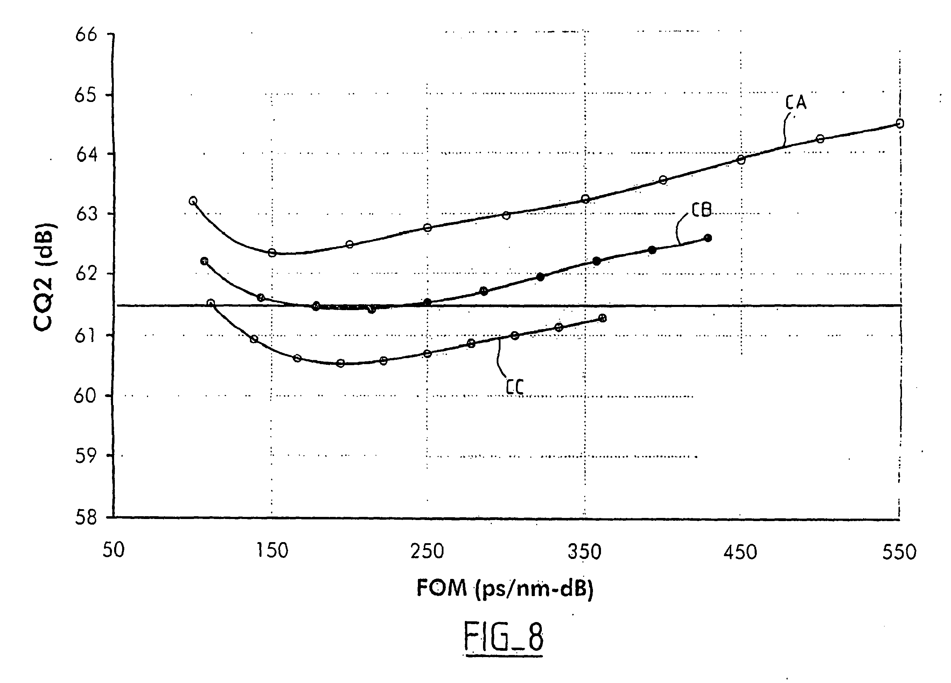

- la figure 8 représente schématiquement une famille de courbes montrant les variations du critère de rapport qualité prix en fonction du facteur de mérite de la fibre optique de compensation, à atténuation de la fibre optique de compensation choisie constante, dans le cas d'une compensation d'une fibre optique de ligne monomode standard ;

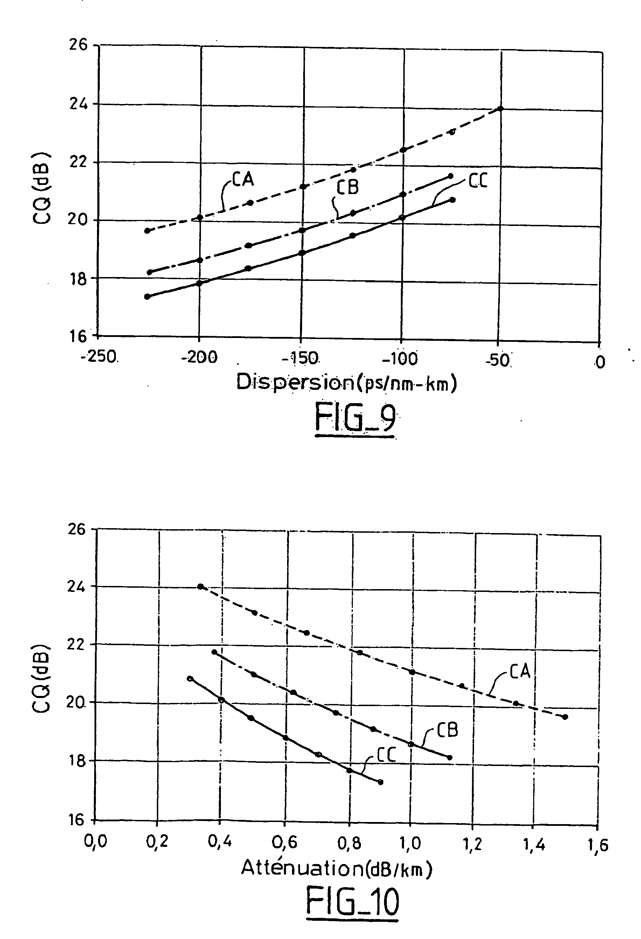

- la figure 9 représente schématiquement une famille de courbes montrant les variations du critère de qualité en fonction de la dispersion chromatique de la fibre optique de compensation, à facteur de mérite de la fibre optique de compensation choisi constant, dans le cas d'une compensation d'une fibre optique de ligne monomode standard ;
- la figure 10 représente schématiquement une famille de courbes montrant les variations du critère de qualité en fonction de l'atténuation de la fibre optique de compensation, à facteur de mérite de la fibre optique de compensation choisi constant, dans le cas d'une compensation d'une fibre optique de ligne monomode standard.

L'ensemble des figures 5 à 10 concerne le cas de la compensation d'une fibre optique de ligne monomode standard, mais les tendances révélées par ces courbes sont les mêmes dans le cas de la compensation d'une fibre optique de ligne monomode à dispersion décalée non nulle. Présentons les paramètres et critères qui seront utilisés dans toute la suite du texte. Deux cas se présentent, soit le module comprend une seule fibre optique de compensation présentant des paramètres, soit le module comprend plusieurs fibres optiques de compensation en série dont l'ensemble présente des paramètres moyens. Dans toutes les figures 1 à 10, pour des raisons de simplicité, le module de compensation sera considéré comme ne comprenant qu'une seule fibre optique de compensation et l'adjectif moyen pourra disparaître lors de la présentation des paramètres.

Lorsque le module de compensation ne comprend qu'une seule fibre optique de compensation, ledit module de compensation présente l'avantage important d'une simplicité de conception et de fabrication dudit module de compensation.

Lorsque le module de compensation comprend plusieurs fibres optiques de compensation de la même famille, c'est-à-dire soit plusieurs tronçons d'une même et identique fibre optique de compensation soit plusieurs réalisations d'une même fibre optique de compensation présentant de légères différences dues aux tolérances de fabrication et que ces fibres optiques sont appariées et assemblées entre elles, elles permettent d'obtenir certaines propriétés avec une grande précision malgré des tolérances de fabrication plus larges, comme par exemple compenser plus précisément la pente de dispersion chromatique ou le rapport dispersion chromatique sur pente de dispersion chromatique de la fibre optique de ligne. Lesdites fibres optiques de compensation de la même famille sont de préférence directement reliées entre elles mais pourraient l'être aussi par l'intermédiaire d'un connecteur. Ledit module de compensation présente les avantages d'une simplicité de conception et d'une amélioration de certaines propriétés dudit module de compensation.

Lorsque le module de compensation comprend plusieurs fibres optiques de compensation distinctes et que ces fibres optiques sont appariées et assemblées entre elles, elles permettent d'obtenir une compensation sur une très large bande spectrale, c'est-à-dire sur au moins deux des bandes spectrales S, C et L. Les bandes spectrales S, C et L s'étendent respectivement environ de 1460nm à 1530nm, de 1530nm à 1565nm, de 1565nm à 1615nm. Toutefois, ledit module de compensation présente l'inconvénient d'une difficulté de conception et de réalisation dudit module de compensation.

Soit le cas de deux fibres présentant respectivement des longueurs l1 et l2 ainsi que respectivement des coefficients d'atténuation par unité de longueur a 1 et a2, la perte de connexion entre les deux fibres valant pc. Le coefficient moyen d'atténuation am par unité de longueur de l'ensemble des fibres optiques de compensation en série vaut am=(a1.l1 +a2.l2+pc)/(l1 +l2). Ce type de calcul de coefficient moyen d'atténuation est généralisable à plus de deux fibres optiques de compensation en série. Seul le coefficient moyen d'atténuation qui est un cas particulier de paramètre de fibre optique se calcule de cette manière, tous les autres paramètres moyens se calculent d'autres manières.

Soit le cas de deux fibres présentant respectivement des longueurs l1 et l2 ainsi que respectivement des dispersions chromatiques par unité de longueur cl et c2. La dispersion chromatique moyenne cm par unité de longueur de l'ensemble des fibres optiques de compensation en série vaut cm=(c1.l1 +c2.l2)/(l1 +l2). Ce type de calcul de dispersion chromatique moyenne est généralisable à plus de deux fibres optiques de compensation en série. Tous les autres paramètres moyens, à l'exception du coefficient moyen d'atténuation, du rapport moyen dispersion chromatique sur pente de dispersion chromatique et du facteur de mérite moyen, se calculent de cette manière, à savoir, la pente de dispersion chromatique moyenne, la surface effective moyenne, le coefficient moyen du deuxième ordre de l'indice de réfraction de la fibre optique en fonction de l'intensité du signal lumineux se propageant dans ladite fibre optique, ce dernier coefficient étant traditionnellement appelé $n_2$. Le rapport moyen dispersion chromatique sur pente de dispersion chromatique est obtenu par le rapport entre la dispersion chromatique moyenne et la pente de dispersion chromatique moyenne. Le facteur de mérite moyen est obtenu par l'opposé du rapport entre la dispersion chromatique moyenne et le coefficient moyen d'atténuation.

Il existe une formule exacte de critère de non linéarité dans le cas de deux fibres optiques de compensation en série, par exemple appelées fibre optique a et fibre optique b. Les exposants a et b des différents paramètres représentent lesdits paramètres respectivement pour les fibres optiques a et b.

Ladite formule exacte vaut

$$NLC = 100 \cdot \left( \frac{n_2^a}{A_{eff}^a \cdot \alpha_{DCF}^a \cdot 10^{\left(\frac{\Gamma_{in}^a}{10}\right)}} [1 - 10^{\left(\frac{D_{DCM}^a}{10 \cdot FOM_{DCF}^a}\right)}] + \frac{10^{\left(\frac{D_{DCM}^a \cdot \alpha_{DCF}^b}{10 \cdot FOM_{DCF}^a \cdot \alpha_{DCF}^a}\right)} \cdot n_2^b}{A_{eff}^b \cdot \alpha_{DCF}^b \cdot 10^{\left(\frac{\Gamma_{in}^a + \Gamma_{in}^b}{10}\right)}} [1 - 10^{\left(\frac{D_{DCM}^b}{10 \cdot FOM_{DCF}^b}\right)}] \right)$$

où $\Gamma_{in}^b = \Gamma_{int\,er}$ dans le cas de deux fibres optiques de compensation en série.

Mais les formules approchées obtenues par l'intermédiaire de paramètres moyens de la ligne optique de compensation donnent d'excellents résultats qui sont très proches de ceux qui pourraient être obtenus à l'aide de la formule exacte. C'est pourquoi, la formule approchée est utilisée.

Le module de compensation de dispersion chromatique comporte, un boîtier comprenant une borne d'entrée et une borne de sortie, ainsi qu'une ligne optique de compensation de dispersion chromatique. La ligne de compensation de dispersion chromatique comprend une ou plusieurs fibres optiques monomodes de compensation de dispersion chromatique en série, ne comprend aucune fibre optique multimode HOM, est située dans le boîtier et relie la borne d'entrée à la borne de sortie. Le module est destiné à être introduit, par l'intermédiaire des bornes d'entrée et de sortie, dans une ligne de transmission comprenant une fibre optique de ligne monomode destinée à transmettre des informations dans un domaine spectral d'utilisation. La borne d'entrée introduit dans la ligne de transmission une perte d'entrée $\Gamma_{in}$ exprimée en dB. La borne de sortie introduit dans la ligne de transmission une perte de sortie $\Gamma_{out}$ exprimée en dB. D'éventuelles connexions supplémentaires entre fibres optiques de compensation, dans le cas où la ligne de compensation comprend plusieurs fibres optiques de compensation en série, introduisent ensemble dans la ligne de transmission une perte de connexion $\Gamma_{inter}$ exprimée en dB.

La fibre optique de compensation ou l'ensemble des fibres optiques de compensation en série présente, à une longueur d'onde valant 1550nm, plusieurs paramètres moyens dont, un coefficient moyen d'atténuation $\alpha_{DCF}$ exprimé en dB/km, une dispersion chromatique moyenne négative $D_{DCF}$ exprimée en ps/nm-km, une pente de dispersion chromatique moyenne négative $S_{DCF}$ exprimée en ps/nm²-km, un rapport moyen dispersion chromatique sur pente de dispersion chromatique valant $D_{DCF}/S_{DCF}$ et étant exprimé en nm, un facteur de mérite moyen $FOM_{DCF}$ valant $-D_{DCF}/\alpha_{DCF}$ et étant exprimé en ps/nm-dB, une surface effective moyenne $A_{eff}$ exprimée en $\mu m^2$, un coefficient moyen $n_2$ du deuxième ordre de l'indice de réfraction en fonction de l'intensité exprimé en $10^{-20}m^2/W$. Comme déjà expliqué ci-dessus, d'une part le coefficient moyen d'atténuation dans le cas d'une unique fibre optique de compensation est confondu avec le coefficient d'atténuation correspondant de ladite fibre optique unique de compensation, et le coefficient moyen d'atténuation dans le cas d'un ensemble de fibres optiques de compensation en série vaut la somme entre d'une part la moyenne arithmétique des coefficients d'atténuation correspondants des différentes fibres optiques de compensation ayant été pondérés par les longueurs respectives desdites différentes fibres optiques de compensation et d'autre part le rapport entre la perte de connexion et la somme des longueurs desdites différentes fibres optiques de compensation, et d'autre part chacun desdits autres paramètres moyens dans le cas d'une unique fibre optique de compensation est confondu avec le paramètre correspondant de ladite fibre optique unique de compensation, et chacun desdits autres paramètres moyens dans le cas d'un ensemble de fibres optiques de compensation en série vaut la moyenne arithmétique des paramètres correspondants des différentes fibres optiques de compensation ayant été pondérés par les longueurs respectives desdites différentes fibres optiques de compensation.

Le module présente des pertes d'insertion IL, avec $IL = \dfrac{D_{DCM}}{D_{DCF}} \cdot \alpha_{DCF} + \Gamma_{in} + \Gamma_{out}$ et avec $D_{DCM}=$ -1360ps/nm pour la compensation d'une fibre optique de ligne monomode standard ou $D_{DCM}=-680ps/nm$ pour la compensation d'un exemple d'une fibre optique de ligne monomode à dispersion décalée non nulle. En effet, un tronçon standard de fibre optique de ligne monomode présente une longueur d'environ 80km, ce qui donne une dispersion chromatique cumulée valant environ -1360ps/nm pour une fibre optique de ligne monomode standard et valant environ -680ps/nm pour un exemple d'une fibre optique de ligne monomode à dispersion décalée non nulle. Même pour d'autres exemples de fibre optique de ligne monomode à dispersion décalée non nulle présentant une dispersion cumulée légèrement différente de -680ps/nm, l'évaluation du critère de qualité avec $D_{DCM}=-680ps/nm$ reste tout à fait valable. De plus, pour évaluer la qualité d'un module, les pertes d'insertions ne sont pas les pertes d'insertion réelles du module qui pourraient être relativement faibles si le module ne compense qu'une partie de la dispersion cumulée, mais les pertes d'insertion que présenterait le module s'il compensait 100% de la dispersion cumulée avec une longueur de fibre optique de compensation un peu plus longue que celle qu'il a s'il ne compense que partiellement. Par ailleurs, dans les formules du critère de qualité, du critère de rapport qualité prix et du critère de non linéarité, la dispersion cumulée est choisie à -1360ps/nm ou -680ps/nm selon le type de fibre optique de ligne monomode à compenser, mais le module peut également servir à compenser d'autres valeurs de dispersion cumulée ou même ne compenser qu'une partie de la dispersion cumulée. Les pertes d'insertion diminuent lorsque le facteur de mérite augmente. Les pertes d'insertion restent constantes à facteur de mérite constant.

Pour pouvoir compenser à environ plus ou moins 20% le rapport dispersion chromatique sur pente de dispersion chromatique d'une fibre optique de ligne monomode standard, la fibre optique de compensation ou l'ensemble des fibres optiques de compensation en série présente un rapport moyen dispersion chromatique sur pente de dispersion chromatique compris entre 240nm et 400nm. Pour pouvoir compenser à environ plus ou moins 10% le rapport dispersion chromatique sur pente de dispersion chromatique d'une fibre optique de ligne monomode standard, la fibre optique de compensation ou l'ensemble des fibres optiques de compensation en série présente de préférence un rapport moyen dispersion chromatique sur pente de dispersion chromatique compris entre 270nm et 370nm.

Pour pouvoir compenser le rapport dispersion chromatique sur pente de dispersion chromatique de la plupart des fibres optiques de ligne monomodes à dispersion décalée non nulle, la fibre optique de compensation ou l'ensemble des fibres optiques de compensation en série présente de préférence un rapport moyen dispersion chromatique sur pente de dispersion chromatique inférieur à 200nm.

Le module présente un critère de non linéarité NLC représentant les effets non linéaires, c'est-à-dire les effets de la phase non linéaire, dans le cas particulier de pertes constantes entre les deux amplificateurs du dispositif d'amplification à double étage, avec $NLC = \dfrac{100 \cdot n_2 \cdot (1 - 10^{\frac{D_{IXH}}{10 \cdot FOM_{IXF}}})}{A_{eff} \cdot \alpha_{DCF} \cdot 10^{\frac{r_{in}}{10}}}$. Cependant, quoique moins pertinent dans d'autres structures de dispositif d'amplification comme le serait un dispositif d'amplification à un seul étage ne comprenant qu'un amplificateur et pas d'atténuateur, le critère de non linéarité resterait alors tout de même intéressant. Ce critère de non linéarité permet une constatation paradoxale, à savoir qu'augmenter l'atténuation d'une fibre optique à facteur de mérite constant, diminue le critère de non linéarité et augmente les performances du module. On peut même diminuer le critère de non linéarité en diminuant le facteur de mérite, pour peu qu'on augmente suffisamment l'atténuation sans trop dégrader la surface effective et le coefficient $n_2$.

Le module présente un critère de qualité CQ, avec $CQ = IL + 10\log NLC$. Les deux contributions, à savoir pertes d'insertion et critère de non linéarité, sont ramenés à la même unité et sont exprimés en dB. Ce critère de qualité est représentatif de la qualité globale d'un module de compensation.

Le module présente un critère de rapport qualité prix CQ2, avec $CQ2 = CQ + B\log(FOM_{DCF})$ et avec B= 18 pour le cas d'une compensation d'une fibre optique de ligne monomode standard et avec B=23 pour le cas d'une compensation d'une fibre optique de ligne monomode à dispersion décalée non nulle. Le facteur de mérite d'une fibre optique de compensation est représentatif de la difficulté de réalisation de cette fibre optique de compensation et par conséquent du coût du module de compensation associé, en sachant que des facteurs de mérite élevés sont encore plus difficiles à obtenir lorsqu'on cherche à obtenir des rapports dispersion chromatique sur pente de dispersion chromatique voisins de ceux des fibres optiques de ligne monomodes à dispersion chromatique décalée non nulle que lorsqu'on cherche à obtenir des rapports dispersion chromatique sur pente de dispersion chromatique voisins de ceux des fibres optiques de ligne monomodes standard lesquels sont plus élevés. Ceci explique la différence de valeur du coefficient B qui pour tenir compte de cette difficulté accrue de réalisation passe de 18 à 23. La partie B log(FOM$_{DCF}$) est exprimée en dB également.

En particulier lors de l'intégration du module de compensation au milieu d'un dispositif d'amplification double étage, au travers du critère de qualité, l'invention met en évidence qu'il est intéressant de dégrader un peu les pertes d'insertion si les pertes dues aux effets non linéaires qui sont représentées par le critère de non linéarité, s'améliorent proportionnellement plus. Par exemple, il est intéressant d'augmenter les pertes d'insertion d'un dB, si par ce biais la contribution dans le critère de qualité du critère de non linéarité diminue de deux dB. Les pertes d'insertion étant fixées entre les deux amplificateurs du dispositif d'amplification double étage, toute diminution de ces pertes d'insertion en dessous du seuil fixé n'a plus pour seul intérêt que la diminution des effets non linéaires qui en découle, ce qui peut être obtenu plus facilement par une diminution importante du critère de qualité associée à une légère augmentation des pertes d'insertion. En effet, en dessous du seuil fixé, une diminution supplémentaire au niveau des pertes d'insertion ne se traduira pas par un gain au niveau du bilan optique global des pertes, car elle aura été annihilée par une augmentation correspondante de l'atténuation de l'atténuateur ; le seul avantage associé à cette diminution des pertes d'insertion étant obtenu au niveau de la tenue aux effets non linéaires, laquelle meilleure tenue peut être plus efficacement et plus facilement obtenue en échangeant une légère augmentation des pertes d'insertion contre une diminution correspondante plus importante du critère de non linéarité. Dans le critère de qualité, la partie la plus importante est la contribution apportée par le critère de non linéarité ; par conséquent, il est intéressant de rééquilibrer les contributions respectives des pertes d'insertion et du critère de non linéarité à l'aide d'un critère de répartition des pertes CRP, avec

$CRP = 1 - \dfrac{2IL}{CQ}$ ce qui équivaut à $CRP = \dfrac{10\log NLC - IL}{10\log NLC + IL}$, qu'il s'agit de diminuer.

A facteur de mérite de la fibre optique de compensation choisi constant, diminuer le critère de qualité revient à diminuer le critère de non linéarité, car les pertes d'insertion sont constantes à facteur de mérite constant de la fibre optique de compensation, lorsque les seuls paramètres variant sont les paramètres de la fibre optique de compensation. Diminuer le critère de non linéarité à facteur de mérite constant revient à augmenter le produit de l'atténuation par la surface effective divisé par le coefficient $n_2$. Diminuer $n_2$ et augmenter la surface effective semble relativement naturel, tandis qu'augmenter l'atténuation de la fibre optique de compensation est assez paradoxal. L'invention traduit cela par l'augmentation d'un critère d'optimisation pour module COM, avec $COM = \dfrac{100 \cdot \alpha_{DCF} \cdot A_{\it eff}}{n_2 \cdot FOM_{DCF}}$ exprimé en

$10^{10}$dB$^2$-W/s, qu'il s'agit d'augmenter. De manière assez surprenante, l'atténuation de la fibre optique de compensation que l'art antérieur essayait à tout prix de diminuer le plus possible se retrouve au numérateur d'une fraction à augmenter, tandis que le facteur de mérite de la fibre optique de compensation que l'art antérieur essayait à tout prix d'augmenter se retrouve au dénominateur d'une fraction à augmenter. Un critère d'optimisation pour module relativement élevé correspond à une fibre optique de compensation bien optimisée pour être utilisée dans un module de compensation.

La figure 1 représente schématiquement un exemple de ligne de transmission intégrant un module de compensation selon l'invention. La ligne de transmission correspond à un tronçon qui, périodiquement répété, et complété par des dispositifs d'émission et des dispositifs de réception, constitue le système de communication. La ligne de transmission comprend successivement, dans le sens de propagation du signal lumineux, une fibre optique 1 de ligne et un dispositif 6 d'amplification et de compensation. Le dispositif 6 d'amplification et de compensation comprend successivement un premier amplificateur amont 2, un atténuateur 3, un module 4 de compensation selon l'invention, un deuxième amplificateur aval 5. En aval du deuxième amplificateur aval 5, se trouve la fibre optique 1 de ligne du tronçon suivant. Le signal lumineux, après s'être propagé le long de la fibre optique 1 de ligne, est amplifié par l'amplificateur amont 2, puis atténué par l'atténuateur 3, compensé au niveau dispersion chromatique par le module 4 de compensation, à nouveau amplifié par l'amplificateur aval 5, avant d'attaquer le tronçon suivant, c'est-à-dire la ligne de transmission suivante.

La figure 2 représente schématiquement un exemple de module de compensation selon l'invention. Le module 4 de compensation comprend un boîtier 49. Le module 4 de compensation comprend successivement une borne d'entrée 41, une ligne optique 40 de compensation de dispersion chromatique, une borne de sortie 42. La ligne optique 40 de compensation peut comprendre une ou plusieurs fibres optiques en série reliées entre elles par des connecteurs. Sur la figure 2, à titre d'exemple, la ligne optique 40 de compensation comprend deux fibres optiques de compensation 43 et 45 reliées entre elles par un connecteur 44. En amont, à la sortie de l'atténuateur 3, le signal lumineux entre par la borne d'entrée 41, se propage dans la fibre optique 43 de compensation, traverse le connecteur 44, se propage dans la fibre optique 45 de compensation, puis sort par la borne de sortie 42 en aval, c'est-à-dire en entrée de l'amplificateur aval 5.

La figure 3 représente schématiquement un tableau de comparaison des performances relatives entre des modules de compensation selon l'art antérieur et des exemples de module de compensation selon l'invention, dans le cas d'une compensation d'une fibre optique de ligne monomode standard. La première colonne représente les numéros des exemples de module de compensation. Les exemples de module de compensation selon l'art antérieur sont notés A1, A2, B1, B2, C1, C2. Les exemples de module de compensation selon l'invention sont notés N1, N2, N3, N4. La colonne suivante représente l'opposé de la dispersion chromatique cumulée par la fibre optique de ligne et qui est l'opposé de la dispersion chromatique qu'il faudrait compenser pour compenser 80km de la fibre optique de ligne à 100%, elle est notée $D_{DCM}$ et est exprimée en ps/nm. La colonne suivante représente la dispersion chromatique de la fibre optique de compensation, elle est notée $D_{DCF}$ et est exprimée en ps/nm-km. La colonne suivante représente la pente de dispersion chromatique de la fibre optique de compensation, elle est notée $S_{DCF}$ et est exprimée en ps/nm$^2$-km. La colonne suivante représente le rapport moyen dispersion chromatique sur pente de dispersion chromatique de la fibre optique de compensation, il est noté $D_{DCF}/S_{DCF}$ et est exprimé en nm. La colonne suivante représente le coefficient d'atténuation de la fibre optique de compensation, il est noté $\alpha_{DCF}$ et est exprimé en dB/km. La colonne suivante représente le facteur de mérite de la fibre optique de compensation, il est noté $FOM_{DCF}$ et est exprimé en ps/nm-dB. La colonne suivante représente la perte d'entrée de la borne d'entrée du module de compensation sensiblement égale à la perte de sortie de la borne de sortie du module de compensation, elle est notée $\Gamma$ et est exprimée en dB. La colonne suivante représente les pertes d'insertion du module de compensation, elles sont notées IL et sont exprimées en dB. La colonne suivante représente la surface effective de la fibre optique de compensation, elle est notée $A_{eff}$ et est exprimée en $\mu$m$^2$. La colonne suivante représente le coefficient moyen du deuxième ordre de l'indice de réfraction de la fibre optique de compensation en fonction de l'intensité du signal lumineux qui se propage dedans, il est noté $n_2$ et est exprimé en $10^{-20}$m$^2$/W. La colonne suivante représente le critère de non linéarité du module de compensation, il est noté NLC et est exprimé en $10^{-6}$km/W-dB. La colonne suivante représente le critère de qualité du module de compensation, il est noté CQ et est exprimé en dB. La colonne suivante représente le critère de rapport qualité prix du module de compensation, il est noté CQ2 et est exprimé en dB. La colonne suivante représente le critère d'optimisation pour module de la fibre optique de compensation, il est noté COM et est exprimé en $10^{10}$dB$^2$-W/s. La colonne suivante représente le critère de répartition des pertes du module de compensation, il est noté CRP et est exprimé en %.

Les modules de compensation selon l'invention présentent un critère de rapport qualité prix qui est nettement plus faible et donc nettement meilleur que celui des modules selon l'art antérieur : il y a plus d'un demi dB entre le plus mauvais module de compensation obtenu selon la méthode de l'invention et le meilleur module de compensation obtenu selon l'art antérieur. Un gain d'un demi dB est déjà considérable.

De préférence, l'invention concerne des modules de compensation présentant un très bon critère de qualité ; pour cela, la fibre optique de compensation ou l'ensemble des fibres optiques de compensation en série présente, pour un facteur de mérite moyen donné, une atténuation moyenne suffisamment élevée pour que le critère de qualité soit inférieur à 18.5dB.

De préférence, l'invention concerne des modules de compensation présentant un excellent critère de qualité ; pour cela, la fibre optique de compensation ou l'ensemble des fibres optiques de compensation en série présente, pour un facteur de mérite moyen donné, une atténuation moyenne suffisamment élevée pour que le critère de qualité soit inférieur à 17.5dB.

De préférence, l'invention concerne des modules de compensation présentant un très bon critère de rapport qualité prix ; pour cela, la fibre optique de compensation ou l'ensemble des fibres optiques de compensation en série présente, pour un facteur de mérite moyen donné, une atténuation moyenne suffisamment élevée pour que le critère de rapport qualité prix soit inférieur à 60.8dB.

De préférence, l'invention concerne des modules de compensation présentant un excellent critère de rapport qualité prix ; pour cela, la fibre optique de compensation ou l'ensemble des fibres optiques de compensation en série présente, pour un facteur de mérite moyen donné, une atténuation moyenne suffisamment élevée pour que le critère de rapport qualité prix soit inférieur à 60.3dB.

Toujours dans le souci d'améliorer le critère de qualité et ou le critère de rapport qualité prix, le module de compensation respecte de préférence un certain nombre de seuils préférentiels décrits ci-après.

De préférence, la fibre optique de compensation ou l'ensemble des fibres optiques de compensation en série présente un critère d'optimisation pour module qui est supérieur à 2. Le critère d'optimisation pour module est avantageusement supérieur à 2.5.

De préférence, la fibre optique de compensation ou l'ensemble des fibres optiques de compensation en série présente un facteur de mérite moyen compris entre 200 et 250 ps/nm-dB.

De préférence, la fibre optique de compensation ou l'ensemble des fibres optiques de compensation en série présente une atténuation moyenne supérieure à 0.9dB/km. La fibre optique de compensation ou l'ensemble des fibres optiques de compensation en série présente avantageusement une atténuation moyenne supérieure à 1.1 dB/km.

De préférence, le module de compensation présente un critère de répartition des pertes qui est inférieur à 30%. Le critère de répartition des pertes est avantageusement inférieur à 23%.

La figure 4 représente schématiquement un tableau de comparaison des performances relatives entre des modules de compensation selon l'art antérieur et des exemples de module de compensation selon l'invention, dans le cas d'une compensation d'une fibre optique de ligne monomode à dispersion décalée non nulle. La première colonne représente les numéros des exemples de module de compensation. Les exemples de module de compensation selon l'art antérieur sont notés B1, B2, B3, B4, C1, C2, C3, C4, C5, C6, C7. Les exemples de module de compensation selon l'invention sont notés N1, N2, N3, N4, N5. Cette numérotation des modules n'a aucun rapport avec la numérotation des modules de la figure 3 : deux mêmes numéros entre les figures 3 et 4 correspondent à des modules sans rapport entre eux. La colonne suivante représente l'opposé de la dispersion chromatique cumulée par la fibre optique de ligne et qui est l'opposé de la dispersion chromatique qu'il faudrait compenser pour compenser 80km de la fibre optique de ligne à 100%, elle est notée $D_{DCM}$ et est exprimée en ps/nm. La dispersion chromatique cumulée par une fibre optique de ligne monomode à dispersion décalée non nulle est plus faible que la dispersion chromatique cumulée d'une fibre optique de ligne monomode standard, car sa dispersion chromatique est également plus faible. La colonne suivante représente la dispersion chromatique de la fibre optique de compensation, elle est notée $D_{DCF}$ et est exprimée en ps/nm-km. La colonne suivante représente la pente de dispersion chromatique de la fibre optique de compensation, elle est notée $S_{DCF}$ et est exprimée en ps/nm²-km. La colonne suivante représente le rapport moyen dispersion chromatique sur pente de dispersion chromatique de la fibre optique de compensation, il est noté $D_{DCF}/S_{DCF}$ et est exprimé en nm. La colonne suivante représente le coefficient d'atténuation de la fibre optique de compensation, il est noté $\alpha_{DCF}$ et est exprimé en dB/km. La colonne suivante représente le facteur de mérite de la fibre optique de compensation, il est noté $FOM_{DCF}$ et est exprimé en ps/nm-dB. La colonne suivante représente la perte d'entrée de la borne d'entrée du module de compensation sensiblement égale à la perte de sortie de la borne de sortie du module de compensation, elle est notée r et est exprimée en dB. La colonne suivante représente les pertes d'insertion du module de compensation, elle sont notées IL et sont exprimées en dB. La colonne suivante représente la surface effective de la fibre optique de compensation, elle est notée $A_{eff}$ et est exprimée en $\mu m^2$. La colonne suivante représente le coefficient moyen du deuxième ordre de l'indice de réfraction de la fibre optique de compensation en fonction de l'intensité du signal lumineux qui se propage dedans, il est noté $n_2$ et est exprimé en $10^{-20}m^2/W$. La colonne suivante représente le critère de non linéarité du module de compensation, il est noté NLC et est exprimé en $10^6$km/W-dB. La colonne suivante représente le critère de qualité du module de compensation, il est noté CQ et est exprimé en dB. La colonne suivante représente le critère de rapport qualité prix du module de compensation, il est noté CQ2 et est exprimé en dB. La colonne suivante représente le critère d'optimisation pour module de la fibre optique de compensation, il est noté COM et est exprimé en $10^{10}dB^2$-W/s. La colonne suivante représente le critère de répartition des pertes du module de compensation, il est noté CRP et est exprimé en %.

Les modules de compensation selon l'invention présentent un critère de rapport qualité prix qui est nettement plus faible et donc nettement meilleur que celui des modules selon l'art antérieur : il y a plus d'un dB entre le plus mauvais module de compensation obtenu selon la méthode de l'invention et le meilleur module de compensation obtenu selon l'art antérieur. Un gain d'un dB est déjà considérable.

De préférence, l'invention concerne des modules de compensation présentant un très bon critère de qualité ; pour cela, la fibre optique de compensation ou l'ensemble des fibres optiques de compensation en série présente, pour un facteur de mérite moyen donné, une atténuation moyenne suffisamment élevée pour que le critère de qualité soit inférieur à 15dB.

De préférence, l'invention concerne des modules de compensation présentant un excellent critère de qualité ; pour cela, la fibre optique de compensation ou l'ensemble des fibres optiques de compensation en série présente, pour un facteur de mérite moyen donné, une atténuation moyenne suffisamment élevée pour que le critère de qualité soit inférieur à 13dB.

De préférence, l'invention concerne des modules de compensation présentant un très bon critère de rapport qualité prix ; pour cela, la fibre optique de compensation ou l'ensemble des fibres optiques de compensation en série présente, pour un facteur de mérite moyen donné, une atténuation moyenne suffisamment élevée pour que le critère de rapport qualité prix soit inférieur à 66.1dB.

De préférence, l'invention concerne des modules de compensation présentant un excellent critère de rapport qualité prix ; pour cela, la fibre optique de compensation ou l'ensemble des fibres optiques de compensation en série présente, pour un facteur de mérite moyen donné, une atténuation moyenne suffisamment élevée pour que le critère de rapport qualité prix soit inférieur à 65.6dB.

Toujours dans le souci d'améliorer le critère de qualité et ou le critère de rapport qualité prix, le module de compensation respecte de préférence un certain nombre de seuils préférentiels décrits ci-après.

De préférence, la fibre optique de compensation ou l'ensemble des fibres optiques de compensation en série présente un critère d'optimisation pour module qui est supérieur à 3. Le critère d'optimisation pour module est avantageusement supérieur à 4.

De préférence, la fibre optique de compensation ou l'ensemble des fibres optiques de compensation en série présente un facteur de mérite moyen compris entre 170 et 220 ps/nm-dB.

De préférence, la fibre optique de compensation ou l'ensemble des fibres optiques de compensation en série présente une atténuation moyenne supérieure à 1.1 dB/km. La fibre optique de compensation ou l'ensemble des fibres optiques de compensation en série présente avantageusement une atténuation moyenne supérieure à 1.3dB/km.

De préférence, le module de compensation présente un critère de répartition des pertes qui est inférieur à 35%. Le critère de répartition des pertes est avantageusement inférieur à 28%.

La figure 5 représente schématiquement une famille de courbes montrant les variations du critère de qualité en fonction du facteur de mérite de la fibre optique de compensation, à dispersion chromatique de la fibre optique de compensation choisie constante, dans le cas d'une compensation d'une fibre optique de ligne monomode standard. En ordonnée, le critère de qualité CQ est exprimé en dB. En abscisse, le facteur de mérite $FOM_{DCF}$ est exprimé en ps/nm-dB. La courbe CA correspond à une dispersion chromatique valant -150 ps/nm-km. La courbe CB correspond à une dispersion chromatique valant -200 ps/nm-km. La courbe CC correspond à une dispersion chromatique valant -250 ps/nm-km. Les courbes CA, CB, CC montrent, au travers de leur pente relativement faible et de leur espacement entre courbes relativement important, que pour diminuer et donc pour améliorer le critère de qualité, il est plus efficace de diminuer la dispersion chromatique de la fibre optique de compensation à facteur de mérite constant plutôt que d'augmenter le facteur de mérite de la fibre optique de compensation à dispersion chromatique constante. Et ceci est d'autant plus vrai que le facteur de mérite est grand et notamment supérieur à une valeur d'environ 200ps/nm-dB. Pour la compensation d'une fibre optique de ligne à dispersion décalée non nulle, le précédent seuil préférentiel se situe plutôt vers 150ps/nm-dB.

La figure 6 représente schématiquement une famille de courbes montrant les variations du critère de rapport qualité prix en fonction du facteur de mérite de la fibre optique de compensation, à dispersion chromatique de la fibre optique de compensation choisie constante, dans le cas d'une compensation d'une fibre optique de ligne monomode standard. En ordonnée, le critère de rapport qualité prix CQ2 est exprimé en dB. En abscisse, le facteur de mérite $FOM_{DCF}$ est exprimé en ps/nm-dB. La courbe CA correspond à une dispersion chromatique valant - 150 ps/nm-km. La courbe CB correspond à une dispersion chromatique valant - 200 ps/nm-km. La courbe CC correspond à une dispersion chromatique valant - 250 ps/nm-km. Les courbes CA, CB, CC montrent, au travers du signe de leur pente et de leur espacement entre courbes relativement important, que pour diminuer et donc pour améliorer le critère de rapport qualité prix, il est intéressant de diminuer la dispersion chromatique de la fibre optique de compensation à facteur de mérite constant et qu'il est nuisible d'augmenter le facteur de mérite de la fibre optique de compensation à dispersion chromatique constante. Toutefois, pour obtenir un critère de qualité minimum, il faut tout de même augmenter le facteur de mérite au-delà d'un certain seuil.

La figure 7 représente schématiquement une famille de courbes montrant les variations du critère de qualité en fonction du facteur de mérite de la fibre optique de compensation, à atténuation de la fibre optique de compensation choisie constante, dans le cas d'une compensation d'une fibre optique de ligne monomode standard. En ordonnée, le critère de qualité CQ est exprimé en dB. En abscisse, le facteur de mérite $FOM_{DCF}$ est exprimé en ps/nm-dB. La courbe CA correspond à une dispersion chromatique valant 0.5dB/km. La courbe CB correspond à une dispersion chromatique valant 0.7dB/km. La courbe CC correspond à une dispersion chromatique valant 0.9dB/km. Les courbes CA, CB, CC montrent, au travers de leur pente relativement faible et de leur espacement entre courbes relativement important, que pour diminuer et donc pour améliorer le critère de qualité, il est plus efficace d'augmenter l'atténuation de la fibre optique de compensation à facteur de mérite constant plutôt que d'augmenter le facteur de mérite de la fibre optique de compensation à atténuation constante. Et ceci est d'autant plus vrai que le facteur de mérite est grand et notamment supérieur à une valeur d'environ 200ps/nm-dB. Pour la compensation d'une fibre optique de ligne à dispersion décalée non nulle, le précédent seuil préférentiel se situe plutôt vers 150ps/nm-dB.

La figure 8 représente schématiquement une famille de courbes montrant les variations du critère de rapport qualité prix en fonction du facteur de mérite de la fibre optique de compensation, à atténuation de la fibre optique de compensation choisie constante, dans le cas d'une compensation d'une fibre optique de ligne monomode standard. En ordonnée, le critère de rapport qualité prix CQ2 est exprimé en dB. En abscisse, le facteur de mérite $FOM_{DCF}$ est exprimé en ps/nm-dB. La courbe CA correspond à une dispersion chromatique valant 0.5dB/km. La courbe CB correspond à une dispersion chromatique valant 0.7dB/km. La courbe CC correspond à une dispersion chromatique valant 0.9dB/km. Les courbes CA, CB, CC montrent, au travers de la présence d'un minimum relativement plat et de leur espacement entre courbes relativement important, que pour diminuer et donc pour améliorer le critère de rapport qualité prix, il est intéressant d'augmenter l'atténuation de la fibre optique de compensation à facteur de mérite constant et que par ailleurs, il existe une plage optimale de facteur de mérite de la fibre optique de compensation, lequel facteur de mérite ne doit être ni trop faible ni trop élevé. La plage optimale est fonction de l'atténuation, mais elle varie relativement peu en fonction de l'atténuation. Un seuil minimum de facteur de mérite doit tout de même être respecté pour obtenir un très bon facteur de qualité, mais augmenter le facteur de mérite le plus possible à tout prix n'est plus du tout la méthode préconisée par l'invention.

La figure 9 représente schématiquement une famille de courbes montrant les variations du critère de qualité en fonction de la dispersion chromatique de la fibre optique de compensation à facteur de mérite de la fibre optique de compensation choisi constant, dans le cas d'une compensation d'une fibre optique de ligne monomode standard. En ordonnée, le critère de qualité CQ est exprimé en dB. En abscisse, la dispersion chromatique est exprimée en ps/nm-km. La courbe CA correspond à un facteur de mérite valant 150 ps/nm-dB. La courbe CB correspond à une dispersion chromatique valant 200 ps/nm-dB. La courbe CC correspond à une dispersion chromatique valant 250 ps/nm-dB. Les courbes CA, CB, CC montrent, au travers de leur pente relativement élevée et de leur espacement entre courbes relativement faible, que pour diminuer et donc pour améliorer le critère de qualité, il est plus efficace de diminuer la dispersion chromatique de la fibre optique de compensation à facteur de mérite constant plutôt que d'augmenter le facteur de mérite de la fibre optique de compensation à dispersion chromatique constante. Et ceci est d'autant plus vrai que le facteur de mérite est grand et notamment supérieur à une valeur d'environ 200ps/nm-dB. Pour la compensation d'une fibre optique de ligne à dispersion décalée non nulle, le précédent seuil préférentiel se situe plutôt vers 150ps/nm-dB.

La figure 10 représente schématiquement une famille de courbes montrant les variations du critère de qualité en fonction de l'atténuation de la fibre optique de compensation à facteur de mérite de la fibre optique de compensation choisi constant, dans le cas d'une compensation d'une fibre optique de ligne monomode standard. En ordonnée, le critère de qualité CQ est exprimé en dB. En abscisse, l'atténuation est exprimée en dB/km. La courbe CA correspond à un facteur de mérite valant 150 ps/nm-dB. La courbe CB correspond à une dispersion chromatique valant 200 ps/nm-dB. La courbe CC correspond à une dispersion chromatique valant 250 ps/nm-dB. Les courbes CA, CB, CC montrent, au travers de leur pente relativement importante et de leur espacement entre courbes relativement faible, que pour diminuer et donc pour améliorer le critère de qualité, il est plus efficace d'augmenter l'atténuation de la fibre optique de compensation à facteur de mérite constant plutôt que d'augmenter le facteur de mérite de la fibre optique de compensation à atténuation constante. Et ceci est d'autant plus vrai que le facteur de mérite est grand et notamment supérieur à une valeur d'environ 200ps/nm-dB. Pour la compensation d'une fibre optique de ligne à dispersion décalée non nulle, le précédent seuil préférentiel se situe plutôt vers 150ps/nm-dB.

De préférence, pour obtenir un module de compensation plus simple, la ligne optique de compensation est constituée d'une seule et même fibre optique reliant la borne d'entrée à la borne de sortie. Plusieurs fibres optiques de compensation en série permettent, au prix d'une certaine complexité, de mieux compenser la pente de dispersion chromatique de la fibre optique de ligne.

De préférence, le dispositif d'amplification de signal et de compensation de dispersion chromatique comprend successivement, un premier amplificateur de signal, un atténuateur de signal, un module de compensation de dispersion chromatique selon l'invention, un deuxième amplificateur de signal.

De préférence, la ligne de transmission comprend successivement, une fibre optique de ligne monomode destinée à transmettre des informations dans un domaine spectral d'utilisation, un dispositif d'amplification de signal et de compensation de dispersion chromatique selon l'invention.

**Revendications**

1. Module de compensation de dispersion chromatique comportant,

un boîtier (49) comprenant une borne d'entrée (41) et une borne de sortie (42),

une ligne optique de compensation (40) de dispersion chromatique comprenant une ou plusieurs fibres optiques monomodes de compensation (43, 45) de dispersion chromatique en série, ne comprenant aucune fibre optique multimode HOM, étant située dans le boîtier et reliant la borne d'entrée à la borne de sortie,

le module étant destiné à être introduit, par l'intermédiaire des bornes d'entrée et de sortie, dans une ligne de transmission comprenant une fibre optique de ligne monomode standard destinée à transmettre des informations dans un domaine spectral d'utilisation,

la borne d'entrée introduisant dans la ligne de transmission une perte d'entrée $\Gamma_{in}$ exprimée en dB,

la borne de sortie introduisant dans la ligne de transmission une perte de sortie $\Gamma_{out}$ exprimée en dB,

d'éventuelles connexions supplémentaires entre fibres optiques de compensation introduisant ensemble dans la ligne de transmission une perte de connexion $\Gamma_{inter}$ exprimée en dB,

la fibre optique de compensation ou l'ensemble des fibres optiques de compensation en série présentant, à une longueur d'onde valant 1550nm, plusieurs paramètres moyens dont, un coefficient moyen d'atténuation $\alpha_{DCF}$ exprimé en dB/km, une dispersion chromatique moyenne négative $D_{DCF}$ exprimée en ps/nm-km, une pente de dispersion chromatique moyenne négative $S_{DCF}$ exprimée en ps/nm$^2$-km, un rapport moyen dispersion chromatique sur pente de dispersion chromatique valant $D_{DCF}/S_{DCF}$ et étant exprimé en nm, un facteur de mérite moyen $FOM_{DCF}$ volant -$D_{DCF}/\alpha_{DCF}$ et étant exprimé en ps/nm-dB, une surface effective moyenne $A_{eff}$ exprimée en $\mu m^2$, un coefficient moyen $n_2$ du deuxième ordre de l'indice de réfraction en fonction de l'intensité exprimé en $10^{-20}m^2/W$,

le rapport moyen dispersion chromatique sur pente de dispersion chromatique valant le rapport entre la dispersion chromatique moyenne et la pente de dispersion chromatique moyenne,

le facteur de mérite moyen valant l'opposé du rapport entre la dispersion chromatique moyenne et le coefficient moyen d'atténuation,

le coefficient moyen d'atténuation dans le cas d'une unique fibre optique de compensation étant confondu avec le coefficient d'atténuation correspondant de ladite fibre optique unique de compensation, et le coefficient moyen d'atténuation dans le cas d'un ensemble de fibres optiques de compensation en série valant la somme entre d'une part la moyenne arithmétique des coefficients d'atténuation correspondants des différentes fibres optiques de compensation ayant été pondérés par les longueurs respectives desdites différentes fibres optiques de compensation et d'autre part le rapport entre la perte de connexion et la somme des longueurs desdites différentes fibres optiques de compensation,

chacun desdits autres paramètres moyens dans le cas d'une unique fibre optique de compensation étant confondu avec le paramètre correspondant de ladite fibre optique unique de compensation, et chacun desdits autres paramètres moyens dans le cas d'un ensemble de fibres optiques de compensation en série valant la moyenne arithmétique des paramètres correspondants des différentes fibres optiques de compensation ayant été pondérés par les longueurs respectives desdites différentes fibres optiques de compensation,

le module présentant des pertes d'insertion IL exprimées en dB,

avec $IL = \dfrac{D_{DCM}}{D_{DCF}} \cdot \alpha_{DCF} + \Gamma_{in} + \Gamma_{out}$ et avec $D_{DCM}$= -1360ps/nm,

le module présentant un critère de non linéarité NLC représentant les effets de la phase non linéaire et étant exprimé en $10^{-6}$km/W-dB,

avec $NLC = \dfrac{100 \cdot n_2 \cdot (1 - 10^{\frac{D_{DCM}}{10 \cdot FOM_{DCF}}})}{A_{eff} \cdot \alpha_{DCF} \cdot 10^{\frac{\Gamma_{in}}{10}}}$,

le module présentant un critère de qualité CQ exprimé en dB,

avec $CQ = IL + 10\log NLC$ ,

le module présentant un critère de rapport qualité prix CQ2 exprimé en dB, avec $CQ2 = CQ + B \log(FOM_{DCF})$ et avec B= 18,

la fibre optique de compensation ou l'ensemble des fibres optiques de compensation en série présentant,

premièrement une dispersion chromatique moyenne inférieure à -130ps/nm-km,

deuxièmement un rapport moyen dispersion chromatique sur pente de dispersion chromatique compris entre 240nm et 400nm,

troisièmement, pour un facteur de mérite moyen donné, une atténuation moyenne suffisamment élevée pour que d'une part le critère de qualité soit inférieur à 20.5dB et d'autre part le critère de rapport qualité prix soit inférieur à 61.3dB.

2. Module selon la revendication 1, **caractérisé en ce que** la fibre optique de compensation ou l'ensemble des fibres optiques de compensation en série présente, pour un facteur de mérite moyen donné, une atténuation moyenne suffisamment élevée pour que le critère de qualité soit inférieur à 18.5dB.

3. Module selon la revendication 2, **caractérisé en ce que** la fibre optique de compensation ou l'ensemble des fibres optiques de compensation en série présente, pour un facteur de mérite moyen donné, une atténuation moyenne suffisamment élevée pour que le critère de qualité soit inférieur à 17.5dB.

4. Module selon l'une quelconque des revendications précédentes, **caractérisé en ce que** la fibre optique de compensation ou l'ensemble des fibres optiques de compensation en série présente, pour un facteur de mérite moyen donné, une atténuation moyenne suffisamment élevée pour que le critère de rapport qualité prix soit inférieur à 60.8dB.

5. Module selon la revendication 4, **caractérisé en ce que** la fibre optique de compensation ou l'ensemble des fibres optiques de compensation en série présente, pour un facteur de mérite moyen donné, une atténuation moyenne suffisamment élevée pour que le critère de rapport qualité prix soit inférieur à 60.3dB.

6. Module selon l'une quelconque des revendications précédentes, **caractérisé en ce que** la fibre optique de compensation ou l'ensemble des fibres optiques de compensation en série présente, pour un facteur de mérite moyen donné, une atténuation moyenne suffisamment élevée pour que le critère de non linéarité, exprimé en $10^{-6}$km/W-dB, soit inférieur à 15.

7. Module selon la revendication 6, **caractérisé en ce que** la fibre optique de compensation ou l'ensemble des fibres optiques de compensation en série présente, pour un facteur de mérite moyen donné, une atténuation moyenne suffisamment élevée pour que le critère de non linéarité, exprimé en $10^{-6}$km/W-dB, soit inférieur à 13.

8. Module selon l'une quelconque des revendications précédentes, **caractérisé en ce que** la fibre optique de compensation ou l'ensemble des fibres optiques de compensation en série présente un critère d'optimisation pour module COM, avec $COM = \dfrac{100 \cdot \alpha_{DCF} \cdot A_{eff}}{n_2 \cdot FOM_{DCF}}$ exprimé en $10^{10}$dB$^2$-W/s, qui est supérieur à 2.

9. Module selon la revendication 8, **caractérisé en ce que** le critère d'optimisation pour module est supérieur à 2.5.

10. Module selon l'une quelconque des revendications précédentes, **caractérisé en ce que** la fibre optique de compensation ou l'ensemble des fibres optiques de compensation en série présente un facteur de mérite moyen compris entre 200 et 250 ps/nm-dB.

11. Module selon l'une quelconque des revendications précédentes, **caractérisé en ce que** la fibre optique de compensation ou l'ensemble des fibres optiques de compensation en série présente une atténuation moyenne supérieure à 0.9dB/km.

12. Module selon la revendication 11 , **caractérisé en ce que** la fibre optique de compensation ou l'ensemble des fibres optiques de compensation en série présente, une atténuation moyenne supérieure à 1.1 dB/km.

**13.** Module selon l'une quelconque des revendications précédentes, **caractérisé en ce que** le module présente un critère de répartition des pertes CRP, avec $CRP = 1 - \dfrac{2IL}{CQ}$, qui est inférieur à 30%.

**14.** Module selon la revendication 13, **caractérisé en ce que** le critère de répartition des pertes est inférieur à 23%.

**15.** Module selon l'une quelconque des revendications précédentes, **caractérisé en ce que** la fibre optique de compensation ou l'ensemble des fibres optiques de compensation en série présente un rapport moyen dispersion chromatique sur pente de dispersion chromatique compris entre 270nm et 370nm.

**16.** Module de compensation de dispersion chromatique comportant,
un boîtier (49) comprenant une borne d'entrée (41) et une borne de sortie (42),
une ligne optique de compensation (40) de dispersion chromatique comprenant une ou plusieurs fibres optiques monomodes de compensation (43, 45) de dispersion chromatique en série, ne comprenant aucune fibre optique multimode HOM, étant située dans le boîtier et reliant la borne d'entrée à la borne de sortie,
le module étant destiné à être introduit, par l'intermédiaire des bornes d'entrée et de sortie, dans une ligne de transmission comprenant une fibre optique de ligne monomode à dispersion décalée non nulle à 1550nm et destinée à transmettre des informations dans un domaine spectral d'utilisation,
la borne d'entrée introduisant dans la ligne de transmission une perte d'entrée $\Gamma_{in}$ exprimée en dB,
la borne de sortie introduisant dans la ligne de transmission une perte de sortie $\Gamma_{out}$ exprimée en dB,
d'éventuelles connexions supplémentaires entre fibres optiques de compensation introduisant ensemble dans la ligne de transmission une perte de connexion $\Gamma_{inter}$ exprimée en dB,
la fibre optique de compensation ou l'ensemble des fibres optiques de compensation en série présentant, à une longueur d'onde valant 1550nm, plusieurs paramètres moyens dont, un coefficient moyen d'atténuation $\alpha_{DCF}$ exprimé en dB/km, une dispersion chromatique moyenne négative $D_{DCF}$ exprimée en ps/nm-km, une pente de dispersion chromatique moyenne négative $S_{DCF}$ exprimée en ps/nm$^2$-km, un rapport moyen dispersion chromatique sur pente de dispersion chromatique valant $D_{OCF}/S_{DCF}$ et étant exprimé en nm, un facteur de mérite moyen $FOM_{DCF}$ valant $-D_{DCF}/\alpha_{DCF}$ et étant exprimé en ps/nm-dB, une surface effective moyenne $A_{eff}$ exprimée en $\mu m^2$, un coefficient moyen $n_2$ du deuxième ordre de l'indice de réfraction en fonction de l'intensité exprimé en $10^{-20}m^2/W$,
le rapport moyen dispersion chromatique sur pente de dispersion chromatique volant le rapport entre la dispersion chromatique moyenne et la pente de dispersion chromatique moyenne,
le facteur de mérite moyen volant l'opposé du rapport entre la dispersion chromatique moyenne et le coefficient moyen d'atténuation,
le coefficient moyen d'atténuation dans le cas d'une unique fibre optique de compensation étant confondu avec le coefficient d'atténuation correspondant de ladite fibre optique unique de compensation, et le coefficient moyen d'atténuation dans le cas d'un ensemble de fibres optiques de compensation en série valant la somme entre d'une part la moyenne arithmétique des coefficients d'atténuation correspondants des différentes fibres optiques de compensation ayant été pondérés par les longueurs respectives desdites différentes fibres optiques de compensation et d'autre part le rapport entre la perte de connexion et la somme des longueurs desdites différentes fibres optiques de compensation,
chacun desdits autres paramètres moyens dans le cas d'une unique fibre optique de compensation étant confondu avec le paramètre correspondant de ladite fibre optique unique de compensation, et chacun desdits autres paramètres moyens dans le cas d'un ensemble de fibres optiques de compensation en série volant la moyenne arithmétique des paramètres correspondants des différentes fibres optiques de compensation ayant été pondérés par les longueurs respectives desdites différentes fibres optiques de compensation,
le module présentant des pertes d'insertion IL exprimées en dB,

avec $IL = \dfrac{D_{DCM}}{D_{DCF}} \cdot \alpha_{DCF} + \Gamma_{in} + \Gamma_{out}$ et avec $D_{DCM} = -680ps/nm$,

le module présentant un critère de non linéarité NLC représentant les effets de la phase non linéaire et étant exprimé en $10^{-6}km/W\text{-}dB$,

$$\text{avec } NLC = \frac{100 \cdot n_2 \cdot (1 - 10^{\frac{D_{\text{NCAI}}}{10 \cdot FOM_{DCF}}})}{A_{\text{eff}} \cdot \alpha_{DCF} \cdot 10^{\frac{\Gamma_{in}}{10}}} \text{ ,}$$

le module présentant un critère de qualité CQ exprimé en dB,

avec $CQ = IL + 10\log NLC$,

le module présentant un critère de rapport qualité prix CQ2 exprimé en dB, avec $CQ2 = CQ + B \, log(FOM_{DCF})$ et avec B = 23,

la fibre optique de compensation ou l'ensemble des fibres optiques de compensation en série présentant,

premièrement une dispersion chromatique moyenne inférieure à -115 ps/nm-km,

deuxièmement, pour un facteur de mérite moyen donné, une atténuation moyenne suffisamment élevée pour que d'une part le critère de qualité soit inférieur à 18dB et d'autre part le critère de rapport qualité prix soit inférieur à 66.6dB.

17. Module selon la revendication 16, **caractérisé en ce que** la fibre optique de compensation ou l'ensemble des fibres optiques de compensation en série présente, pour un facteur de mérite moyen donné, une atténuation moyenne suffisamment élevée pour que le critère de qualité soit inférieur à 15dB.

18. Module selon la revendication 17, **caractérisé en ce que**
la fibre optique de compensation ou l'ensemble des fibres optiques de compensation en série présente, pour un facteur de mérite moyen donné,
une atténuation moyenne suffisamment élevée pour que le critère de qualité soit inférieur à 13dB.

19. Module selon l'une quelconque des revendications 16 à 18, **caractérisé en ce que** la fibre optique de compensation ou l'ensemble des fibres optiques de compensation en série présente, pour un facteur de mérite moyen donné, une atténuation moyenne suffisamment élevée pour que le critère de rapport qualité prix soit inférieur à 66.1 dB.

20. Module selon la revendication 19, **caractérisé en ce que** la fibre optique de compensation ou l'ensemble des fibres optiques de compensation en série présente, pour un facteur de mérite moyen donné, une atténuation moyenne suffisamment élevée pour que le critère de rapport qualité prix soit inférieur à 65.6dB.

21. Module selon l'une quelconque des revendications 16 à 20, **caractérisé en ce que** la fibre optique de compensation ou l'ensemble des fibres optiques de compensation en série présente, pour un facteur de mérite moyen donné, une atténuation moyenne suffisamment élevée pour que le critère de non linéarité, exprimé en $10^{-6}$km/W-dB, soit inférieur à 7.5.

22. Module selon la revendication 21, **caractérisé en ce que** la fibre optique de compensation ou l'ensemble des fibres optiques de compensation en série présente, pour un facteur de mérite moyen donné, une atténuation moyenne suffisamment élevée pour que le critère de non linéarité, exprimé en $10^{-6}$km/W-dB, soit inférieur à 6.5.

23. Module selon l'une quelconque des revendications 16 à 22, **caractérisé en ce que** la fibre optique de compensation ou l'ensemble des fibres optiques de compensation en série présente un critère d'optimisation pour module COM,

avec $COM = \dfrac{100 \cdot \alpha_{DCF} \cdot A_{\text{eff}}}{n_2 \cdot FOM_{DCF}}$ exprimé en $10^{10}$dB²-W/s, qui est supérieur à 3.

24. Module selon la revendication 23, **caractérisé en ce que** le critère d'optimisation pour module est supérieur à 4.

25. Module selon l'une quelconque des revendications 16 à 24, **caractérisé en ce que** la fibre optique de compensation ou l'ensemble des fibres optiques de compensation en série présente un facteur de mérite moyen compris entre 170 et 220 ps/nm-dB.

26. Module selon l'une quelconque des revendications 16 à 25, **caractérisé en ce que** la fibre optique de compensation ou l'ensemble des fibres optiques de compensation en série présente une atténuation moyenne supérieure à 1.1dB/km.

**27.** Module selon la revendication 26, **caractérisé en ce que** la fibre optique de compensation ou l'ensemble des fibres optiques de compensation en série présente une atténuation moyenne supérieure à 1.3dB/km.

**28.** Module selon l'une quelconque des revendications 16 à 27, **caractérisé en ce que** le module présente un critère de répartition des pertes CRP, avec $CRP = 1 - \dfrac{2IL}{CQ}$, qui est inférieur à 35%.

**29.** Module selon la revendication 28, **caractérisé en ce que** le critère de répartition des pertes est inférieur à 28%.

**30.** Module selon l'une quelconque des revendications 16 à 29, **caractérisé en ce que** la fibre optique de compensation ou l'ensemble des fibres optiques de compensation en série présente un rapport moyen dispersion chromatique sur pente de dispersion chromatique inférieur à 200nm.

**31.** Module selon l'une quelconque des revendications précédentes, **caractérisé en ce que** la ligne optique de compensation est constituée d'une seule et même fibre optique reliant la borne d'entrée à la borne de sortie.

**32.** Module selon l'une quelconque des revendications 1 à 30, **caractérisé en ce que** la ligne optique de compensation est constituée de plusieurs fibres optiques de la même famille, c'est-à-dire soit plusieurs tronçons de la même fibre optique, soit plusieurs fibres optiques semblables entre elles aux tolérances de fabrication près.

**33.** Module selon l'une quelconque des revendications 1 à 30, **caractérisé en ce que** la ligne optique de compensation comprend plusieurs fibres optiques distinctes entre elles, et **en ce que** le domaine spectral d'utilisation comprend au moins deux bandes spectrales parmi les bandes spectrales S, C et L.

**34.** Dispositif d'amplification de signal et de compensation de dispersion chromatique comprenant successivement, un premier amplificateur (2) de signal, un atténuateur (3) de signal, un module de compensation (4) de dispersion chromatique selon l'une quelconque des revendications précédentes, un deuxième amplificateur (5) de signal.

**35.** Ligne de transmission comprenant successivement, une fibre optique de ligne monomode (1) destinée à transmettre des informations dans un domaine spectral d'utilisation, un dispositif (6) d'amplification de signal et de compensation de dispersion chromatique selon la revendication 34.

**36.** Procédé de conception d'un module de compensation de dispersion chromatique,
ledit module étant destiné à comporter,
un boîtier comprenant une borne d'entrée et une borne de sortie,
une ligne optique de compensation de dispersion chromatique comprenant une ou plusieurs fibres optiques monomodes de compensation de dispersion chromatique en série, ne comprenant aucune fibre optique multimode HOM, étant située dans le boîtier et reliant la borne d'entrée à la borne de sortie,
ledit module étant destiné à être introduit, par l'intermédiaire des bornes d'entrée et de sortie, dans une ligne de transmission comprenant une fibre optique de ligne monomode destinée à transmettre des informations dans un domaine spectral d'utilisation,
la borne d'entrée introduisant dans la ligne de transmission une perte d'entrée $\Gamma_{in}$ exprimée en dB,
la borne de sortie introduisant dans la ligne de transmission une perte de sortie $\Gamma_{out}$ exprimée en dB,
d'éventuelles connexions supplémentaires entre fibres optiques de compensation introduisant ensemble dans la ligne de transmission une perte de connexion $\Gamma_{inter}$ exprimée en dB,
la fibre optique de compensation ou l'ensemble des fibres optiques de compensation en série présentant, à une longueur d'onde valant 1550nm, plusieurs paramètres moyens dont, un coefficient moyen d'atténuation $\alpha_{DCF}$ exprimé en dB/km, une dispersion chromatique moyenne négative $D_{DCF}$ exprimée en ps/nm-km, une pente de dispersion chromatique moyenne négative $\alpha_{DCF}$ exprimée en ps/nm²-km, un rapport moyen dispersion chromatique sur pente de dispersion chromatique valant $D_{DCF}/S_{DCF}$ et étant exprimé en nm, un facteur de mérite moyen $FOM_{OCF}$ valant $-D_{DCF}/\alpha_{DCF}$ et étant exprimé en ps/nm-dB, une surface effective moyenne $A_{eff}$ exprimée en $\mu m^2$, un coefficient moyen $n_2$ du deuxième ordre de l'indice de réfraction en fonction de l'intensité exprimé en $10^{-20}m^2/W$,
le rapport moyen dispersion chromatique sur pente de dispersion chromatique valant le rapport entre la dispersion chromatique moyenne et la pente de dispersion chromatique moyenne,

le facteur de mérite moyen valant l'opposé du rapport entre la dispersion chromatique moyenne et le coefficient moyen d'atténuation,

le coefficient moyen d'atténuation dans le cas d'une unique fibre optique de compensation étant confondu avec le coefficient d'atténuation correspondant de ladite fibre optique unique de compensation, et le coefficient moyen d'atténuation dans le cas d'un ensemble de fibres optiques de compensation en

série valant la somme entre d'une part la moyenne arithmétique des coefficients d'atténuation correspondants des différentes fibres optiques de compensation ayant été pondérés par les longueurs respectives desdites différentes fibres optiques de compensation et d'autre part le rapport entre la perte de connexion et la somme des longueurs desdites différentes fibres optiques de compensation,

chacun desdits autres paramètres moyens dans le cas d'une unique fibre optique de compensation étant confondu avec le paramètre correspondant de ladite fibre optique unique de compensation, et chacun desdits autres paramètres moyens dans le cas d'un ensemble de fibres optiques de compensation en série volant la moyenne arithmétique des paramètres correspondants des différentes fibres optiques de compensation ayant été pondérés par les longueurs respectives desdites différentes fibres optiques de compensation,

ledit module étant destiné à présenter des pertes d'insertion IL exprimées en dB,

avec $IL = \dfrac{D_{DCM}}{D_{DCF}} \cdot \alpha_{DCF} + \Gamma_{in} + \Gamma_{out}$ et avec $D_{DCM}$ représentant l'opposé de la dispersion cumulée de la fibre optique de ligne,

ledit module étant destiné à présenter un critère de non linéarité NLC représentant les effets de la phase non linéaire et étant exprimé en $10^{-6}$km/W-dB,

avec $NLC = \dfrac{100 \cdot n_2 \cdot (1 - 10^{\frac{D_{DCM}}{10 \cdot FOM_{DCF}}})}{A_{eff} \cdot \alpha_{DCF} \cdot 10^{\frac{\Gamma_{in}}{10}}}$,

ledit module étant destiné à présenter un critère de qualité CQ exprimé en dB,

avec $CQ = IL + 10 \log NLC$,

ledit procédé de conception comprenant une étape d'optimisation dudit module, ladite étape d'optimisation consistant à diminuer le critère de qualité, à facteur de mérite moyen choisi constant, en augmentant l'atténuation moyenne.

**Claims**

1. Chromatic dispersion compensation module comprising a housing (49) comprising an input terminal (41) and an output terminal (42),

   a chromatic dispersion compensation optical line (40) comprising one or more chromatic dispersion compensation single-mode optical fibres (43, 45) in series, not comprising an HOM multimode optical fibre, being located in the housing and connecting the input terminal to the output terminal,

   the module being arranged to be inserted, by way of the input and output terminals, into a transmission line comprising a standard single-mode line optical fibre arranged to transmit information in a spectral range of use,

   the input terminal introducing into the transmission line an input loss $\Gamma_{in}$, expressed in dB,

   the output terminal introducing into the transmission line an output loss $\Gamma_{out}$, expressed in dB,

   additional connections, where present, between compensation optical fibres together introducing into the transmission line a connection loss $\Gamma_{inter}$, expressed in dB,

   the compensation optical fibre or set of compensation optical fibres in series having, at a wavelength equal to 1550 nm, several average parameters including an average attenuation coefficient $\alpha_{DCF}$ expressed in dB/km, a negative average chromatic dispersion $D_{DCF}$ expressed in ps/nm-km, a negative average chromatic dispersion slope $S_{DCF}$ expressed in ps/nm$^2$-km, an average ratio of chromatic dispersion over chromatic dispersion slope equal to $D_{DCF}/S_{DCF}$ and expressed in nm, an average figure of merit $FOM_{CCF}$ equal to $-D_{DCF}/\alpha_{DCF}$ and expressed in ps/nm-dB, an average effective area $A_{eff}$ expressed in $\mu m^2$, an average second-order coefficient $n_2$, expressed in $10^{-20}$ m$^2$/W, of the refractive index as a function of the intensity,

   the average ratio of chromatic dispersion over chromatic dispersion slope being equal to the ratio between the average chromatic dispersion and the average chromatic dispersion slope,

   the average figure of merit being equal to the negative of the ratio between the average chromatic dispersion and the average attenuation coefficient,

the average attenuation coefficient in the case of a single compensation optical fibre being the same as the corresponding attenuation coefficient of said single compensation optical fibre, and the average attenuation coefficient in the case of a set of compensation optical fibres in series being equal to the sum of firstly the arithmetic average of the corresponding attenuation coefficients of the different compensation optical fibres weighted by the respective lengths of said different compensation optical fibres and secondly the ratio between the connection loss and the sum of the lengths of said different compensation optical fibres,

each of said other average parameters in the case of a single compensation optical fibre being the same as the corresponding parameter of said single compensation optical fibre, and each of said other average parameters in the case of a set of compensation optical fibres in series being equal to the arithmetic average of the corresponding parameters of the different compensation optical fibres weighted by the respective lengths of said different compensation optical fibres,

the module having insertion losses IL, expressed in dB,

where $IL = \dfrac{D_{DCM}}{D_{DCF}} \cdot \alpha_{DCF} + \Gamma_{in} + \Gamma_{out}$ and where $D_{DCM}$ = -1360 ps/nm,

the module having a non-linearity criterion NLC representing the effects of the non-linear phase and being expressed in $10^{-6}$ km/W-dB,

where $NLC = \dfrac{100 \cdot n_2 \cdot (1 - 10^{\frac{D_{DCM}}{10 \cdot FOM_{DCF}}})}{A_{eff} \cdot \alpha_{DCF} \cdot 10^{\frac{\Gamma_{in}}{10}}}$ ,

the module having a quality criterion CQ, expressed in dB,

where $CQ = IL + 10 \log NLC,$

the module having a quality-to-price ratio criterion CQ2, expressed in dB, where $CQ2 = CQ + B \log(FOM_{DCF})$ and where B = 18,

the compensation optical fibre or set of compensation optical fibres in series having,

firstly, an average chromatic dispersion less than -130 ps/nm-km, secondly, an average ratio of chromatic dispersion over chromatic dispersion slope between 240 nm and 400 nm, inclusive,

thirdly, for a given average figure of merit, an average attenuation which is sufficiently high for, on the one hand, the quality criterion to be less than 20.5 dB and, on the other hand, for the quality-to-price ratio criterion to be less than 61.3 dB.

2. Module according to claim 1, **characterised in that** the compensation optical fibre or set of compensation optical fibres in series has, for a given average figure of merit, an average attenuation which is sufficiently high for the quality criterion to be less than 18.5 dB.

3. Module according to claim 2, **characterised in that** the compensation optical fibre or set of compensation optical fibres in series has, for a given average figure of merit, an average attenuation which is sufficiently high for the quality criterion to be less than 17.5 dB.

4. Module according to any one of the preceding claims, **characterised in that** the compensation optical fibre or set of compensation optical fibres in series has, for a given average figure of merit, an average attenuation which is sufficiently high for the quality-to-price ratio criterion to be less than 60.8 dB.

5. Module according to claim 4, **characterised in that** the compensation optical fibre or set of compensation optical fibres in series has, for a given average figure of merit, an average attenuation which is sufficiently high for the quality-to-price ratio criterion to be less than 60.3 dB.

6. Module according to any one of the preceding claims, **characterised in that** the compensation optical fibre or set of compensation optical fibres in series has, for a given average figure of merit, an average attenuation which is sufficiently high for the non-linearity criterion, expressed in $10^{-6}$ km/W-dB, to be less than 15.

7. Module according to claim 6, **characterised in that** the compensation optical fibre or set of compensation optical fibres in series has, for a given average figure of merit, an average attenuation which is sufficiently high for the non-linearity criterion, expressed in $10^{-6}$ km/W-dB , to be less than 13.

8. Module according to any one of the preceding claims, **characterised in that** the compensation optical fibre or set of compensation optical fibres in series has a module optimisation criterion COM, where

$$COM = \frac{100 \cdot \alpha_{DCF} \cdot A_{eff}}{n_2 \cdot FOM_{DCF}}$$ , expressed in $10^{10}$ dB$^2$-W/s, which is greater than 2.

9. Module according to claim 8, **characterised in that** the module optimisation criterion is greater than 2.5.

10. Module according to any one of the preceding claims, **characterised in that** the compensation optical fibre or set of compensation optical fibres in series has an average figure of merit between 200 and 250 ps/nm-dB, inclusive.

11. Module according to any one of the preceding claims, **characterised in that** the compensation optical fibre or set of compensation optical fibres in series has an average attenuation greater than 0.9 dB/km.

12. Module according to claim 11, **characterised in that** the compensation optical fibre or set of compensation optical fibres in series has an average attenuation greater than 1.1 dB/km.

13. Module according to any one of the preceding claims, **characterised in that** the module has a loss distribution criterion CRP, where $$CRP = 1 - \frac{2IL}{CQ}$$ , which is less than 30%.

14. Module according to claim 13, **characterised in that** the loss distribution criterion is less than 23 %.

15. Module according to any one of the preceding claims, **characterised in that** the compensation optical fibre or set of compensation optical fibres in series has an average ratio of chromatic dispersion over chromatic dispersion slope between 270 nm and 370 nm, inclusive.

16. Chromatic dispersion compensation module comprising
a housing (49) comprising an input terminal (41) and an output terminal (42),
a chromatic dispersion compensation optical line (40) comprising one or more chromatic dispersion compensation single-mode optical fibres (43, 45) in series, not comprising an HOM multimode optical fibre, being located in the housing and connecting the input terminal to the output terminal,
the module being arranged to be inserted, by way of the input and output terminals, into a transmission line comprising a dispersion-shifted single-mode line optical fibre having non-zero dispersion at 1550 nm and arranged to transmit information in a spectral range of use,
the input terminal introducing into the transmission line an input loss $\Gamma_{in}$, expressed in dB,
the output terminal introducing into the transmission line an output loss $\Gamma_{out}$, expressed in dB,
additional connections, where present, between compensation optical fibres together introducing into the transmission line a connection loss $\Gamma_{inter}$, expressed in dB,
the compensation optical fibre or set of compensation optical fibres in series having, at a wavelength equal to 1550 nm, several average parameters including an average attenuation coefficient $\alpha_{DCF}$ expressed in dB/km, a negative average chromatic dispersion $D_{DCF}$ expressed in ps/nm-km, a negative average chromatic dispersion slope $S_{DCF}$ expressed in ps/nm$^2$-km, an average ratio of chromatic dispersion over chromatic dispersion slope equal to $D_{DCF}/S_{DCF}$ and expressed in nm, an average figure of merit $FOM_{DCF}$ equal to $-D_{CCF}/\alpha_{DCF}$ and expressed in ps/nm-dB, an average effective area $A_{eff}$ expressed in $\mu m^2$, an average second-order coefficient $n_2$, expressed in $10^{-20}$ m$^2$/W, of the refractive index as a function of the intensity,
the average ratio of chromatic dispersion over chromatic dispersion slope being equal to the ratio between the average chromatic dispersion and the average chromatic dispersion slope,
the average figure of merit being equal to the negative of the ratio between the average chromatic dispersion and the average attenuation coefficient,
the average attenuation coefficient in the case of a single compensation optical fibre being the same as the corresponding attenuation coefficient of said single compensation optical fibre, and the average attenuation coefficient in the case of a set of compensation optical fibres in series being equal to the sum of firstly the arithmetic average of the corresponding attenuation coefficients of the different compensation optical fibres weighted by the respective lengths of said different compensation optical fibres and secondly the ratio between the connection loss and the sum of the lengths of said different compensation optical fibres,

each of said other average parameters in the case of a single compensation optical fibre being the same as the corresponding parameter of said single compensation optical fibre, and each of said other average parameters in the case of a set of compensation optical fibres in series being equal to the arithmetic average of the corresponding parameters of the different compensation optical fibres weighted by the respective lengths of said different compensation optical fibres,

the module having insertion losses IL, expressed in dB,

where $IL = \dfrac{D_{DCM}}{D_{DCF}} \cdot \alpha_{DCF} + \Gamma_{in} + \Gamma_{out}$ and where $D_{DCM} = -680$ ps/nm,

the module having a non-linearity criterion NLC representing the effects of the non-linear phase and being expressed in $10^{-6}$ km/W-dB,

where $NLC = \dfrac{100 \cdot n_2 \cdot (1 - 10^{\frac{D_{DCM}}{10 \cdot FOM_{DCF}}})}{A_{eff} \cdot \alpha_{DCF} \cdot 10^{\frac{\Gamma_{in}}{10}}}$,

the module having a quality criterion CQ, expressed in dB,

where $CQ = IL + 10 \log NLC$,

the module having a quality-to-price ratio criterion CQ2, expressed in dB, where $CQ2 = CQ + B\log(FOM_{DCF})$ and where B = 23,

the compensation optical fibre or set of compensation optical fibres in series having,

firstly, an average chromatic dispersion less than -115 ps/nm-km, secondly, for a given average figure of merit, an average attenuation which is sufficiently high for, on the one hand, the quality criterion to be less than 18 dB and, on the other hand, for the quality-to-price ratio criterion to be less than 66.6 dB.

17. Module according to claim 16, **characterised in that** the compensation optical fibre or set of compensation optical fibres in series has, for a given average figure of merit, an average attenuation which is sufficiently high for the quality criterion to be less than 15 dB.

18. Module according to claim 17, **characterised in that**
the compensation optical fibre or set of compensation optical fibres in series has, for a given average figure of merit, an average attenuation which is sufficiently high for the quality criterion to be less than 13 dB.

19. Module according to any one of claims 16 to 18, **characterised in that** the compensation optical fibre or set of compensation optical fibres in series has, for a given average figure of merit, an average attenuation which is sufficiently high for the quality-to-price ratio criterion to be less than 66.1 dB.

20. Module according to claim 19, **characterised in that** the compensation optical fibre or set of compensation optical fibres in series has, for a given average figure of merit, an average attenuation which is sufficiently high for the quality-to-price ratio criterion to be less than 65.6 dB.

21. Module according to any one of claims 16 to 20, **characterised in that** the compensation optical fibre or set of compensation optical fibres in series has, for a given average figure of merit, an average attenuation which is sufficiently high for the non-linearity criterion, expressed in $10^{-6}$ km/W-dB , to be less than 7.5.

22. Module according to claim 21, **characterised in that** the compensation optical fibre or set of compensation optical fibres in series has, for a given average figure of merit, an average attenuation which is sufficiently high for the non-linearity criterion, expressed in $10^{-6}$ km/W-dB , to be less than 6.5.

23. Module according to any one of claims 16 to 22, **characterised in that** the compensation optical fibre or set of compensation optical fibres in series has a module optimisation criterion COM, where

$COM = \dfrac{100 \cdot \alpha_{DCF} \cdot A_{eff}}{n_2 \cdot FOM_{DCF}}$, expressed in $10^{10}$ dB$^2$-Wls, which is greater than 3.

**24.** Module according to claim 23, **characterised in that** the module optimisation criterion is greater than 4.

**25.** Module according to any one of claims 16 to 24, **characterised in that** the compensation optical fibre or set of compensation optical fibres in series has an average figure of merit between 170 and 220 ps/nm-dB, inclusive.

**26.** Module according to any one of claims 16 to 25, **characterised in that** the compensation optical fibre or set of compensation optical fibres in series has an average attenuation greater than 1.1 dB/km.

**27.** Module according to claim 26, **characterised in that** the compensation optical fibre or set of compensation optical fibres in series has an average attenuation greater than 1.3 dB/km.

**28.** Module according to any one of claims 16 to 27, **characterised in that** the module has a loss distribution criterion CRP, where $CRP = 1 - \dfrac{2IL}{CQ}$, which is less than 35 %.

**29.** Module according to claim 28, **characterised in that** the loss distribution criterion is less than 28 %.

**30.** Module according to any one of claims 16 to 29, **characterised in that** the compensation optical fibre or set of compensation optical fibres in series has an average ratio of chromatic dispersion over chromatic dispersion slope which is less than 200 nm.

**31.** Module according to any one of the preceding claims, **characterised in that** the compensation optical line is composed of one and the same optical fibre connecting the input terminal to the output terminal.

**32.** Module according to any one of claims 1 to 30, **characterised in that** the compensation optical line is composed of a plurality of optical fibres of the same family, that is to say either a plurality of sections of the same optical fibre or a plurality of optical fibres that are similar to one another apart from manufacturing tolerances.

**33.** Module according to any one of claims 1 to 30, **characterised in that** the compensation optical line comprises a plurality of optical fibres that differ from one another; and **in that** the spectral range of use includes at least two spectral bands from among the spectral bands S, C and L.

**34.** Signal amplification and chromatic dispersion compensation arrangement comprising, in succession, a first signal amplifier (2), a signal attenuator (3), a chromatic dispersion compensation module (4) according to any one of the preceding claims, and a second signal amplifier (5).

**35.** Transmission line comprising, in succession, a single-mode line optical fibre (1) arranged to transmit information in a spectral range of use and a signal amplification and chromatic dispersion compensation arrangement (6) according to claim 34.

**36.** Method of designing a chromatic dispersion compensation module,
said module being arranged to comprise
a housing comprising an input terminal and an output terminal,
a chromatic dispersion compensation optical line comprising one or more chromatic dispersion compensation single-mode optical fibres in series, not comprising an HOM multimode optical fibre, being located in the housing and connecting the input terminal to the output terminal,
said module being arranged to be inserted, by way of the input and output terminals, into a transmission line comprising a single-mode line optical fibre arranged to transmit information in a spectral range of use,
the input terminal introducing into the transmission line an input loss $\Gamma_{in}$, expressed in dB,
the output terminal introducing into the transmission line an output loss $\Gamma_{out}$, expressed in dB,
additional connections, where present, between compensation optical fibres together introducing into the transmission line a connection loss $\Gamma_{inter}$, expressed in dB,
the compensation optical fibre or set of compensation optical fibres in series having, at a wavelength equal to 1550 nm, several average parameters including an average attenuation coefficient $\alpha_{DCF}$ expressed in dB/km, a negative average chromatic dispersion $D_{DCF}$ expressed in ps/nm-km, a negative average chromatic dispersion slope $S_{DCF}$

expressed in ps/nm²-km, an average ratio of chromatic dispersion over chromatic dispersion slope equal to $D_{DCF}/S_{DCF}$ and expressed in nm, an average figure of merit $FOM_{DCF}$ equal to $-D_{DCF}/\alpha_{DCF}$ and expressed in ps/nm-dB, an average effective area $A_{eff}$ expressed in $\mu m^2$, an average second-order coefficient $n_2$, expressed in $10^{-20}$ $m^2/W$, of the refractive index as a function of the intensity,
the average ratio of chromatic dispersion over chromatic dispersion slope being equal to the ratio between the average chromatic dispersion and the average chromatic dispersion slope,
the average figure of merit being equal to the negative of the ratio between the average chromatic dispersion and the average attenuation coefficient,
the average attenuation coefficient in the case of a single compensation optical fibre being the same as the corresponding attenuation coefficient of said single compensation optical fibre, and the average attenuation coefficient in the case of a set of compensation optical fibres in series being equal to the sum of firstly the arithmetic average of the corresponding attenuation coefficients of the different compensation optical fibres weighted by the respective lengths of said different compensation optical fibres and secondly the ratio between the connection loss and the sum of the lengths of said different compensation optical fibres,
each of said other average parameters in the case of a single compensation optical fibre being the same as the corresponding parameter of said single compensation optical fibre, and each of said other average parameters in the case of a set of compensation optical fibres in series being equal to the arithmetic average of the corresponding parameters of the different compensation optical fibres weighted by the respective lengths of said different compensation optical fibres,

said module being arranged to have insertion losses IL, expressed in dB, where $IL = \dfrac{D_{DCM}}{D_{DCF}} \cdot \alpha_{DCF} + \Gamma_{in} + \Gamma_{out}$

and where $D_{DCM}$ represents the negative of the cumulative dispersion of the line optical fibre,
said module being arranged to have a non-linearity criterion NLC representing the effects of the non-linear phase and being expressed in $10^{-6}$ km/W-dB,

where $NLC = \dfrac{100 \cdot n_2 \cdot \left(1 - 10^{\frac{D_{DCM}}{10 \cdot FOM_{DCF}}}\right)}{A_{eff} \cdot \alpha_{DCF} \cdot 10^{\frac{\Gamma_{in}}{10}}}$,

said module being arranged to have a quality criterion CQ, expressed in dB, where $CQ = IL + 10 \log NLC$,
said design method comprising a step of optimisation of said module, said optimisation step consisting of reducing the quality criterion, at a constant selected average figure of merit, by increasing the average attenuation.

**Patentansprüche**

1.  Modul zur Kompensation der chromatischen Dispersion umfassend:

    ein Gehäuse (49) umfassend eine Eingangsklemme (41) und eine Ausgangsklemme (42),
    eine optische Leitung (40) zur Kompensation der chromatischen Dispersion umfassend eine oder mehrere in Reihe geschaltete optische Monomodefasern (43, 45) zur Kompensation der optischen Kompensation und nicht umfassend irgendeine optische Multimode-HOM-Faser, welche in dem Gehäuse angeordnet ist und die Eingangsklemme mit der Ausgangsklemme verbindet,
    wobei das Modul dazu bestimmt ist, über die Eingangsklemme und die Ausgangsklemme in eine Übertragungsleitung eingefügt zu werden, welche eine optische Standard-Monomodeleitungsfaser umfasst, welche dazu bestimmt ist, Informationen in einem nutzbaren Spektralbereich zu übertragen,
    wobei die Eingangsklemme in die Übertragungsleitung einen Eingangsverlust von $\Gamma_{in}$ in dB einführt,
    wobei die Ausgangsklemme in die Übertragungsleitung einen Ausgangsverlust $\Gamma_{out}$ in dB einführt,
    wobei mögliche zusätzliche Verbindungen zwischen optischen Fasern zur Kompensation zusammen in die Übertragungsleitung einen Verbindungsverlust $\Gamma_{inter}$ in dB einführen,
    wobei die optische Faser zur Kompensation oder die Gesamtheit der in Reihe geschalteten optischen Fasern zur Kompensation bei einer Wellenlänge von 1550 nm verschiedene mittlere Parameter aufweisen, darunter einen mittleren Dämpfungskoeffizienten $\alpha_{DCF}$ in dB/km, eine mittlere negative chromatische Dispersion $D_{DCF}$ in ps/nm · km, eine mittlere negative Steigung der chromatischen Dispersion $S_{DCF}$ in ps/nm² · km, ein mittleres Verhältnis der chromatischen Dispersion zur Steigung der chromatischen Dispersion mit dem Wert $D_{DCF}/S_{DCF}$

in nm, einen mittleren Gütefaktor FOM$_{DCF}$ mit dem Wert -D$_{DCF}$/ α$_{DCF}$ in ps/nm · dB, eine mittlere effektive Oberfläche A$_{eff}$ in μm$^2$, einen mittleren Koeffizienten n$_2$ der zweiten Ordnung des Brechungsindex in Abhängigkeit von der Intensität in 10$^{-20}$m$^2$/W,

wobei das mittlere Verhältnis der chromatischen Dispersion zur Steigung der chromatischen Dispersion den Wert des Verhältnisses der mittleren chromatischen Dispersion zu der mittleren Steigung der chromatischen Dispersion aufweist,

wobei der mittlere Gütefaktor den negativen Wert des Verhältnisses der mittleren chromatischen Dispersion zu dem mittleren Dämpfungskoeffizienten aufweist,

wobei der mittlere Dämpfungskoeffizient im Fall einer einzigen optischen Faser zur Kompensation dem Dämpfungskoeffizienten, welcher der einzigen optischen Faser zur Kompensation entspricht, entspricht, und der mittlere Dämpfungskoeffizient im Fall einer Gesamtheit von optischen Fasern zur Kompensation, welche in Reihe geschaltet sind, der Summe aus erstens dem arithmetischen Mittel der Dämpfungskoeffizienten, welche den verschiedenen optischen Fasern zur Kompensation zugeordnet sind, gewichtet mit den jeweiligen Längen der verschiedenen optischen Fasern zur Kompensation, und zweitens dem Verhältnis des Verbindungsverlusts zu der Summe der Längen der verschiedenen optischen Fasern zur Kompensation,

wobei jeder der anderen mittleren Parameter in dem Fall einer einzigen optischen Faser zur Kompensation dem entsprechenden Parameter der einzigen optischen Faser zur Kompensation entspricht und jeder der anderen mittleren Parametern im Fall einer Gesamtheit von optischen Fasern zur Kompensation, welche in Reihe geschaltet sind, dem arithmetischen Mittel der entsprechenden Parameter der verschiedenen optischen Fasern zur Kompensation gewichtet mit den jeweiligen Längen der verschiedenen optischen Fasern zur Kompensation entspricht,

wobei das Modul Einsetzverluste IL in dB aufweist,

mit $IL = \dfrac{D_{DCM}}{D_{DCF}} \cdot \alpha_{DCF} + \Gamma_{in} + \Gamma_{out}$ und mit D$_{DCM}$ = -1360 ps/nm,

wobei das Modul ein Nichtlinearitätskriterium NLC aufweist, welches nichtlineare Phaseneffekte darstellt und welches in 10$^{-6}$km/W · dB ausgedrückt ist,

mit $NCL = \dfrac{100 \cdot n_2 \cdot \left(1 - 10^{\frac{D_{DCM}}{10 \cdot FOM_{DCF}}}\right)}{A_{eff} \cdot \alpha_{DCF} \cdot 10^{\frac{\Gamma_{in}}{10}}}$ ,

wobei das Modul ein Qualitätskriterium CQ in dB aufweist,
mit *CQ=IL+10log NLC,*
wobei das Modul ein Qualitäts-Preis-Verhältniskriterium CQ2 in dB aufweist,
mit CQ2 = CQ + B · log(FOM$_{DCF}$) mit B= 18,
wobei die optische Faser zur Kompensation oder die Gesamtheit der optischen Fasern zur Kompensation, welche in Reihe geschaltet sind, aufweist bzw. aufweisen:

erstens eine mittlere chromatische Dispersion kleiner als -130ps/nm · km,
zweitens ein mittleres Verhältnis der chromatischen Dispersion zur Steigung der chromatischen Dispersion, welches zwischen 240 nm und 400nm enthalten ist,
drittens für einen gegebenen Gütefaktor eine mittlere Dämpfung, welche hinreichend hoch ist, dass auf der einen Seite das Qualitätskriterium kleiner als 20,5dB ist und auf der anderen Seite das Qualitäts-Preis-Verhältniskriterium kleiner als 61,3dB ist.

**2.** Modul gemäß Anspruch 1, **dadurch gekennzeichnet, dass** die optische Faser zur Kompensation oder die Gesamtheit der optischen Fasern zur Kompensation, welche in Reihe geschaltet sind, für einen gegebenen Gütefaktor eine mittlere Dämpfung aufweist, welche hinreichend hoch ist, dass das Qualitätskriterium kleiner als 18,5dB ist.

**3.** Modul gemäß Anspruch 2, **dadurch gekennzeichnet, dass** die optische Faser zur Kompensation oder die Gesamtheit der optischen Fasern zur Kompensation, welche in Reihe geschaltet sind, für einen gegebenen Gütefaktor eine mittlere Dämpfung aufweist, welche hinreichend hoch ist, dass das Qualitätskriterium kleiner als 17,5dB ist.

**4.** Modul gemäß einem der vorhergehenden Ansprüche, **dadurch gekennzeichnet, dass** die optische Faser zur Kompensation oder die Gesamtheit der in Reihe geschalteten optischen Fasern zur Kompensation für einen gegebenen mittleren Gütefaktor eine hinreichend hohe mittlere Dämpfung aufweist, dass das Qualitäts-Preis-Verhältniskriterium kleiner als 60,8dB ist.

5. Modul gemäß Anspruch 4, **dadurch gekennzeichnet, dass** die optische Faser zur Kompensation oder die Gesamtheit der in Reihe geschalteten optischen Fasern zur Kompensation für einen gegebenen mittleren Gütefaktor eine hinreichend hohe mittlere Dämpfung aufweist, dass das Qualitäts-Preis-Verhältniskriterium kleiner als 60,3dB ist.

6. Modul gemäß einem der vorhergehenden Ansprüche, **dadurch gekennzeichnet, dass** die optische Faser zur Kompensation oder die Gesamtheit der in Reihe geschalteten optischen Fasern zur Kompensation für einen gegebenen Gütefaktor eine hinreichend hohe mittlere Dämpfung aufweist, dass das in $10^{-6}$km/W · dB angegebene Nichtlinearitätskriterium kleiner als 15 ist.

7. Modul gemäß Anspruch 6, **dadurch gekennzeichnet dass** die optische Faser zur Kompensation oder die Gesamtheit der in Reihe geschalteten optischen Fasern zur Kompensation für einen gegebenen Gütefaktor eine hinreichend hohe mittlere Dämpfung aufweist, dass das in $10^{-6}$km/W · dB angegebene Nichtlinearitätskriterium kleiner als 13 ist.

8. Modul gemäß einem der vorhergehenden Ansprüche, **dadurch gekennzeichnet, dass** die optische Faser zur Kompensation oder die Gesamtheit der in Reihe geschalteten optischen Fasern zur Kompensation ein Optimierungskriterium COM für das Modul aufweisen, mit $COM = \dfrac{100 \cdot \alpha_{DCF} \cdot A_{eff}}{n_2 \cdot FOM_{DCF}}$ in $10^{10}$dB$^2$ · W/s, welches größer als 2 ist.

9. Modul gemäß Anspruch 8, **dadurch gekennzeichnet, dass** das Optimierungskriterium für das Modul größer als 2,5 ist.

10. Modul gemäß einem der vorhergehenden Ansprüche, **dadurch gekennzeichnet, dass** die optische Faser zur Kompensation oder die Gesamtheit der in Reihe geschalteten optischen Fasern zur Kompensation einen mittleren Gütefaktor aufweist, welcher zwischen 200 und 250 ps/nm · dB enthalten ist.

11. Modul gemäß einem der vorhergehenden Ansprüche, **dadurch gekennzeichnet, dass** die optische Faser zur Kompensation oder die Gesamtheit der in Reihe geschalteten optischen Fasern zur Kompensation eine mittlere Dämpfung größer als 0,9dB/km aufweist.

12. Modul gemäß Anspruch 11, **dadurch gekennzeichnet, dass** die optische Faser zur Kompensation oder die Gesamtheit der in Reihe geschalteten optischen Fasern zur Kompensation eine mittlere Dämpfung größer als 1,1dB/km aufweist.

13. Modul gemäß einem der vorhergehenden Ansprüche, **dadurch gekennzeichnet, dass** das Modul ein Verlustverteilungskriterium CRP aufweist,

mit $CRP = 1 - \dfrac{2IL}{CQ}$ , welches kleiner als 30% ist.

14. Modul gemäß Anspruch 13, **dadurch gekennzeichnet, dass** das Verlustverteilungskriterium kleiner als 23% ist.

15. Modul gemäß einem der vorhergehenden Ansprüche, **dadurch gekennzeichnet, dass** die optische Faser zur Kompensation oder die Gesamtheit der in Reihe geschalteten optischen Fasern zur Kompensation ein mittleres Verhältnis der chromatischen Dispersion zu der Steigung der chromatischen Dispersion aufweist, welches zwischen 270nm und 370nm enthalten ist.

16. Modul zur Kompensation der chromatischen Dispersion umfassend:

ein Gehäuse (49) umfassend eine Eingangsklemme (41) und eine Ausgangsklemme (42),

eine optische Leitung (40) zur Kompensation der chromatischen Dispersion umfassend eine oder mehrere in Reihe geschaltete optische Monomodefasern (43, 45) zur Kompensation der optischen Kompensation und nicht umfassend irgendeine optische Multimode-HOM-Faser, welche in dem Gehäuse angeordnet ist und die Eingangsklemme mit der Ausgangsklemme verbindet,

wobei das Modul dazu bestimmt ist, über die Eingangsklemme und die Ausgangsklemme in eine Übertragungsleitung eingefügt zu werden, welche eine optische Standard-Monomodeleitungsfaser mit versetzter Dispersion, welche bei 1550nm von Null verschieden ist, umfasst, welche dazu bestimmt ist, Informationen in einem nutzbaren Spektralbereich zu übertragen,

wobei die Eingangsklemme in die Übertragungsleitung einen Eingangsverlust von $\Gamma_{in}$ in dB einführt,

wobei die Ausgangsklemme in die Übertragungsleitung einen Ausgangsverlust $\Gamma_{out}$ in dB einführt,

wobei mögliche zusätzliche Verbindungen zwischen optischen Fasern zur Kompensation zusammen in die Übertragungsleitung einen Verbindungsverlust $\Gamma_{inter}$ in dB einführen,

wobei die optische Faser zur Kompensation oder die Gesamtheit der in Reihe geschalteten optischen Fasern zur Kompensation bei einer Wellenlänge von 1550 nm verschiedene mittlere Parameter aufweisen, darunter einen mittleren Dämpfungskoeffizienten $\alpha_{DCF}$ in dB/km, eine mittlere negative chromatische Dispersion $D_{DCF}$ in ps/nm · km, eine mittlere negative Steigung der chromatischen Dispersion $S_{DCF}$ in ps/nm² · km, ein mittleres Verhältnis der chromatischen Dispersion zur Steigung der chromatischen Dispersion mit dem Wert $D_{DCF}/S_{DCF}$ in nm, einen mittleren Gütefaktor $FOM_{DCF}$ mit dem Wert $-D_{DCF}/\alpha_{DCF}$ in ps/nm · dB, eine mittlere effektive Oberfläche $A_{eff}$ in $\mu m^2$, einen mittleren Koeffizienten $n_2$ der zweiten Ordnung des Brechungsindex in Abhängigkeit von der Intensität in $10^{-20} m^2/W$,

wobei das mittlere Verhältnis der chromatischen Dispersion zur Steigung der chromatischen Dispersion den Wert des Verhältnisses der mittleren chromatischen Dispersion zu der mittleren Steigung der chromatischen Dispersion aufweist,

wobei der mittlere Gütefaktor den negativen Wert des Verhältnisses der mittleren chromatischen Dispersion zu dem mittleren Dämpfungskoeffizienten aufweist,

wobei der mittlere Dämpfungskoeffizient im Fall einer einzigen optischen Faser zur Kompensation dem Dämpfungskoeffizienten, welcher der einzigen optischen Faser zur Kompensation entspricht, entspricht, und der mittlere Dämpfungskoeffizient im Fall einer Gesamtheit von optischen Fasern zur Kompensation, welche in Reihe geschaltet sind, der Summe des arithmetischem Mittels der Dämpfungskoeffizienten, welche den verschiedenen optischen Fasern zur Kompensation zugeordnet sind, gewichtet mit den jeweiligen Längen der verschiedenen optischen Fasern zur Kompensation, mit dem Verhältnis des Verbindungsverlusts zu der Summe der Längen der verschiedenen optischen Fasern zur Kompensation,

wobei jeder der anderen mittleren Parameter in dem Fall einer einzigen optischen Faser zur Kompensation dem entsprechenden Parameter der einzigen optischen Faser zur Kompensation entspricht und jeder der anderen mittleren Parametern im Fall einer Gesamtheit von optischen Fasern zur Kompensation, welche in Reihe geschaltet sind, dem arithmetischen Mittel der entsprechenden Parameter der verschiedenen optischen Fasern zur Kompensation gewichtet mit den jeweiligen Längen der verschiedenen optischen Fasern zur Kompensation entspricht,

wobei das Modul Einsetzverluste IL in dB aufweist,

mit $IL = \dfrac{D_{DCM}}{D_{DCF}} \cdot \alpha_{DCF} + \Gamma_{in} + \Gamma_{out}$   und mit $D_{DCM}$ = -680ps/nm,

wobei das Modul ein Nichtlinearitätskriterium NLC aufweist, welches nichtlineare Phaseneffekte darstellt und welches in $10^{-6}$ km/W x dB ausgedrückt ist,

mit $NCL = \dfrac{100 \cdot n_2 \cdot \left(1 - 10^{\frac{D_{DCM}}{10 \cdot FOM_{DCF}}}\right)}{A_{eff} \cdot \alpha_{DCF} \cdot 10^{\frac{\Gamma_{in}}{10}}}$ ,

wobei das Modul ein Qualitätskriterium CQ in dB aufweist,

mit $CQ = IL + 10\log NLC$,

wobei das Modul ein Qualitäts-Preis-Verhältniskriterium CQ2 in dB aufweist,

mit CQ2 = CQ + Blog($FOM_{DCF}$) mit B= 23,

wobei die optische Faser zur Kompensation oder die Gesamtheit der optischen Fasern zur Kompensation, welche in Reihe geschaltet sind, aufweist bzw. aufweisen:

erstens eine mittlere chromatische Dispersion kleiner als -115ps/nm · km,

zweitens für einen gegebenen Gütefaktor eine mittlere Dämpfung, welche hinreichend hoch ist, dass auf der einen Seite das Qualitätskriterium kleiner als 18dB ist und auf der anderen Seite das Qualitäts-Preis-Verhältniskriterium kleiner als 66,6dB ist.

17. Modul gemäß Anspruch 16, **dadurch gekennzeichnet, dass** die optische Faser zur Kompensation oder die Gesamtheit der optischen Fasern zur Kompensation, welche in Reihe geschaltet sind, für einen gegebenen Gütefaktor eine mittlere Dämpfung aufweist, welche hinreichend hoch ist, dass das Qualitätskriterium kleiner als 15dB ist.

18. Modul gemäß Anspruch 17, **dadurch gekennzeichnet, dass** die optische Faser zur Kompensation oder die Gesamtheit der optischen Fasern zur Kompensation, welche in Reihe geschaltet sind, für einen gegebenen Gütefaktor eine mittlere Dämpfung aufweist, welche hinreichend hoch ist, dass das Qualitätskriterium kleiner als 13dB ist.

19. Modul gemäß einem der Ansprüche 16 bis 18, **dadurch gekennzeichnet, dass** die optische Faser zur Kompensation oder die Gesamtheit der in Reihe geschalteten optischen Fasern zur Kompensation für einen gegebenen mittleren Gütefaktor eine hinreichend hohe mittlere Dämpfung aufweist, dass das Qualitäts-Preis-Verhältniskriterium kleiner als 66,1dB ist.

20. Modul gemäß Anspruch 19, **dadurch gekennzeichnet, dass** die optische Faser zur Kompensation oder die Gesamtheit der in Reihe geschalteten optischen Fasern zur Kompensation für einen gegebenen mittleren Gütefaktor eine hinreichend hohe mittlere Dämpfung aufweist, dass das Qualitäts-Preis-Verhältniskriterium kleiner als 65,6dB ist.

21. Modul gemäß einem der Ansprüche 16 bis 20, **dadurch gekennzeichnet, dass** die optische Faser zur Kompensation oder die Gesamtheit der in Reihe geschalteten optischen Fasern zur Kompensation für einen gegebenen Gütefaktor eine hinreichend hohe mittlere Dämpfung aufweist, dass das in $10^{-6}$km/W · dB angegebene Nichtlinearitätskriterium kleiner als 7,5 ist.

22. Modul gemäß Anspruch 21, **dadurch gekennzeichnet, dass** die optische Faser zur Kompensation oder die Gesamtheit der in Reihe geschalteten optischen Fasern zur Kompensation für einen gegebenen Gütefaktor eine hinreichend hohe mittlere Dämpfung aufweist, dass das in $10^{-6}$km/W · dB angegebene Nichtlinearitätskriterium kleiner als 6,5 ist.

23. Modul gemäß einem der Ansprüche 16 bis 22, **dadurch gekennzeichnet, dass** die optische Faser zur Kompensation oder die Gesamtheit der in Reihe geschalteten optischen Fasern zur Kompensation ein Optimierungskriterium COM für das Modul aufweisen, mit $COM = \dfrac{100 \cdot \alpha_{DCF} \cdot A_{eff}}{n_2 \cdot FOM_{DCF}}$ in $10^{10}$dB$^2$ · W/s, welches größer als 3 ist.

24. Modul gemäß Anspruch 23, **dadurch gekennzeichnet, dass** das Optimierungskriterium für das Modul größer als 4 ist.

25. Modul gemäß einem der Ansprüche 16 bis 24, **dadurch gekennzeichnet, dass** die optische Faser zur Kompensation oder die Gesamtheit der in Reihe geschalteten optischen Fasern zur Kompensation einen mittleren Gütefaktor aufweist, welcher zwischen 170 und 220 ps/nm · dB enthalten ist.

26. Modul gemäß einem der Ansprüche 16 bis 25, **dadurch gekennzeichnet, dass** die optische Faser zur Kompensation oder die Gesamtheit der in Reihe geschalteten optischen Fasern zur Kompensation eine mittlere Dämpfung größer als 1,1dB/km aufweist.

27. Modul gemäß Anspruch 26, **dadurch gekennzeichnet, dass** die optische Faser zur Kompensation oder die Gesamtheit der in Reihe geschalteten optischen Fasern zur Kompensation eine mittlere Dämpfung größer als 1,3dB/km aufweist.

28. Modul gemäß einem der Ansprüche 16 bis 27, **dadurch gekennzeichnet, dass** das Modul ein Verlustverteilungskriterium CRP aufweist,

mit $CRP = 1 - \dfrac{2IL}{CQ}$ , welches kleiner als 35% ist.

**29.** Modul gemäß Anspruch 28, **dadurch gekennzeichnet, dass** das Verlustverteilungskriterium kleiner als 28% ist.

**30.** Modul gemäß einem der Ansprüche 16 bis 29, **dadurch gekennzeichnet, dass** die optische Faser zur Kompensation oder die Gesamtheit der in Reihe geschalteten optischen Fasern zur Kompensation ein mittleres Verhältnis der chromatischen Dispersion zu der Steigung der chromatischen Dispersion aufweist, welches kleiner ist als 200nm.

**31.** Modul gemäß einem der vorhergehenden Ansprüche, **dadurch gekennzeichnet, dass** die optische Leitung zur Kompensation aus einen einzigen optischen Faser besteht, welche die Eingangsklemme mit der Ausgangsklemme verbindet.

**32.** Modul gemäß einem der Ansprüche 1 bis 30, **dadurch gekennzeichnet, dass** die optische Leitung zur Kompensation aus mehreren optischen Fasern der gleichen Familie besteht, d.h. aus mehreren Abschnitten der gleichen optischen Fasern oder aus mehreren optischen Fasern, welche einander innerhalb der Toleranzen der Herstellung gleichen.

**33.** Modul gemäß einem der Ansprüche 1 bis 30, **dadurch gekennzeichnet, dass** die optische Leitung zur Kompensation mehrere voneinander verschiedene optische Fasern umfasst, und dass der nutzbare Spektralbereich mindestens zwei Spektralbanden aus den Spektralbanden S, C und L umfasst.

**34.** Vorrichtung zur Signalverstärkung und zur Kompensation der chromatischen Dispersion, welche aufeinanderfolgend einen ersten Signalverstärker (2), einen Signaldämpfer (3), ein Modul (4) zur Kompensation der chromatischen Dispersion gemäß einem der vorhergehenden Ansprüche und einen zweiten Signalverstärker (5) umfasst.

**35.** Übertragungsleitung umfassend aufeinanderfolgend eine monomodige optische Leitungsfaser (1) zum Übertragen von Informationen in einem Nutzspektralbereich, und eine Vorrichtung (6) zum Verstärken des Signals und zur Kompensation der chromatischen Dispersion gemäß Anspruch 34.

**36.** Verfahren zum Entwurf eines Moduls zur Kompensation der chromatischen Dispersion, wobei das Modul dazu bestimmt ist, zu umfassen:

ein Gehäuse umfassend eine Eingangsklemme und eine Ausgangsklemme,
eine optische Leitung zur Kompensation der chromatischen Dispersion umfassend eine oder mehrere in Reihe geschaltete optische Monomodefasern zur Kompensation der optischen Kompensation und nicht umfassend irgendeine optische Multimode-HOM-Faser, welche in dem Gehäuse angeordnet ist und die Eingangsklemme mit der Ausgangsklemme verbindet,
wobei das Modul dazu bestimmt ist, über die Eingangsklemme und die Ausgangsklemme in eine Übertragungsleitung eingefügt zu werden, welche eine optische Standard-Monomodeleitungsfaser umfasst, welche dazu bestimmt ist, Informationen in einem nutzbaren Spektralbereich zu übertragen,
wobei die Eingangsklemme in die Übertragungsleitung einen Eingangsverlust von $\Gamma_{in}$ in dB einführt,
wobei die Ausgangsklemme in die Übertragungsleitung einen Ausgangsverlust $\Gamma_{out}$ in dB einführt,
wobei mögliche zusätzliche Verbindungen zwischen optischen Fasern zur Kompensation zusammen in die Übertragungsleitung einen Verbindungsverlust $\Gamma_{inter}$ in dB einführen,
wobei die optische Faser zur Kompensation oder die Gesamtheit der in Reihe geschalteten optischen Fasern zur Kompensation bei einer Wellenlänge von 1550 nm verschiedene mittlere Parameter aufweisen, darunter einen mittleren Dämpfungskoeffizienten $\alpha_{DCF}$ in dB/km, eine mittlere negative chromatische Dispersion $D_{DCF}$ in ps/nm $\cdot$ km, eine mittlere negative Steigung der chromatischen Dispersion $S_{DCF}$ in ps/nm² $\cdot$ km, ein mittleres Verhältnis der chromatischen Dispersion zur Steigung der chromatischen Dispersion mit dem Wert $D_{DCF}/S_{DCF}$ in nm, einen mittleren Gütefaktor $FOM_{DCF}$ mit dem Wert $-D_{DCF}/\alpha_{DCF}$ in ps/nm $\cdot$ dB, eine mittlere effektive Oberfläche $A_{eff}$ in $\mu m^2$, einen mittleren Koeffizienten $n_2$ der zweiten Ordnung des Brechungsindex in Abhängigkeit von der Intensität in $10^{-20}m^2/W$,
wobei das mittlere Verhältnis der chromatischen Dispersion zur Steigung der chromatischen Dispersion den Wert des Verhältnisses der mittleren chromatischen Dispersion zu der mittleren Steigung der chromatischen Dispersion aufweist,

wobei der mittlere Gütefaktor den negativen Wert des Verhältnisses der mittleren chromatischen Dispersion zu dem mittleren Dämpfungskoeffizienten aufweist,

wobei der mittlere Dämpfungskoeffizient im Fall einer einzigen optischen Faser zur Kompensation dem Dämpfungskoeffizienten, welcher der einzigen optischen Faser zur Kompensation entspricht, entspricht, und der mittlere Dämpfungskoeffizient im Fall einer Gesamtheit von optischen Fasern zur Kompensation, welche in Reihe geschaltet sind, der Summe aus erstens dem arithmetischen Mittel der Dämpfungskoeffizienten, welche den verschiedenen optischen Fasern zur Kompensation zugeordnet sind, gewichtet mit den jeweiligen Längen der verschiedenen optischen Fasern zur Kompensation, und zweitens dem Verhältnis des Verbindungsverlusts zu der Summe der Längen der verschiedenen optischen Fasern zur Kompensation,

wobei jeder der anderen mittleren Parameter in dem Fall einer einzigen optischen Faser zur Kompensation dem entsprechenden Parameter der einzigen optischen Faser zur Kompensation entspricht und jeder der anderen mittleren Parametern im Fall einer Gesamtheit von optischen Fasern zur Kompensation, welche in Reihe geschaltet sind, dem arithmetischen Mittel der entsprechenden Parameter der verschiedenen optischen Fasern zur Kompensation gewichtet mit den jeweiligen Längen der verschiedenen optischen Fasern zur Kompensation entspricht,

wobei das Modul dazu bestimmt ist Einsetzverluste IL in dB aufzuweisen,

mit $IL = \dfrac{D_{DCM}}{D_{DCF}} \cdot \alpha_{DCF} + \Gamma_{in} + \Gamma_{out}$   und wobei $D_{DCM}$ das Entgegengesetzte der kumulierten Dispersion der optischen Leitungsfaser darstellt,

wobei das Modul dazu bestimmt ist ein Nichtlinearitätskriterium NLC aufzuweisen, welches nichtlineare Phaseneffekte darstellt und welches in $10^{-6}$ km/W · dB ausgedrückt ist,

mit $NCL = \dfrac{100 \cdot n_2 \cdot \left(1 - 10^{\frac{D_{DCM}}{10 \cdot FOM_{DCF}}}\right)}{A_{eff} \cdot \alpha_{DCF} \cdot 10^{\frac{\Gamma_{in}}{10}}}$ ,

wobei das Modul dazu bestimmt ist ein Qualitätskriterium CQ in dB aufzuweisen,

mit $CQ = IL + 10\log NLC,$

wobei das Entwurfsverfahren einen Optimierungsschritt des Moduls umfasst, wobei der Optimierungsschritt darin besteht, das Qualitätskriterium bei konstantem gewähltem mittleren Gütefaktor zu verringern, wobei dabei die mittlere Dämpfung vergrößert wird.

# FIG_1

# FIG_2

# FIG_3

| Modules | $D_{DCM}$ (ps/nm) | $D_{DCF}$ (ps/nm·km) | $S_{DCF}$ (ps/nm²·km) | $D_{DCF}/S_{DCF}$ (nm) | $\alpha_{DCF}$ (dB/km) | $FOM_{DCF}$ (ps/nm·dB) | $\Gamma$ (dB) | IL (dB) | $A_{eff}$ (μm²) | $n_2$ ($10^{-20}$ m²/W) | NLC ($10^{-6}$ km/W·dB) | CQ (dB) | CQ2 (dB) | COM ($10^{10}$ dB²·W/s) | CRP (%) |
|---|---|---|---|---|---|---|---|---|---|---|---|---|---|---|---|
| A1 | -1360 | -95 | -0,32 | 300 | 0,58 | 164 | 0,50 | 9,3 | 21 | 3 | 18,7 | 22,0 | 61,9 | 2,5 | 16% |
| A2 | -1360 | -95 | -0,32 | 300 | 0,47 | 202 | 0,50 | 7,7 | 21 | 3 | 21,3 | 21,0 | 62,5 | 1,6 | 26% |
| N1 | -1360 | -130 | -0,43 | 300 | 0,70 | 186 | 0,30 | 7,9 | 19 | 3 | 17,2 | 20,3 | 61,1 | 2,4 | 22% |
| N2 | -1360 | -200 | -0,67 | 300 | 0,95 | 211 | 0,30 | 7,1 | 18 | 3 | 12,7 | 18,1 | 59,9 | 2,7 | 22% |
| N3 | -1360 | -300 | -1,00 | 300 | 1,10 | 273 | 0,50 | 6,0 | 17 | 4 | 13,0 | 17,1 | 61,0 | 1,7 | 30% |
| N4 | -1360 | -300 | -1,00 | 300 | 1,40 | 214 | 0,50 | 7,3 | 17 | 4 | 11,5 | 18,0 | 59,9 | 2,8 | 18% |
| B1 | -1360 | -125 | -0,42 | 300 | 0,45 | 278 | 0,50 | 5,9 | 20 | 3 | 20,1 | 18,9 | 62,9 | 1,1 | 38% |
| B2 | -1360 | -250 | -0,83 | 300 | 0,75 | 333 | 0,25 | 4,6 | 18 | 3,8 | 16,2 | 16,7 | 62,1 | 1,1 | 45% |
| C1 | -1360 | -85 | -0,30 | 283 | 0,30 | 283 | 0,50 | 5,8 | 21 | 3,8 | 36,0 | 21,4 | 65,5 | 0,6 | 46% |
| C2 | -1360 | -150 | -0,60 | 250 | 0,45 | 333 | 0,50 | 5,1 | 19 | 4 | 25,4 | 19,1 | 64,5 | 0,6 | 47% |

## FIG_4

| Modules | $D_{DCM}$ (ps/nm) | $D_{DCF}$ (ps/nm·km) | $S_{DCF}$ (ps/nm²·km) | $D_{DCF}/S_{DCF}$ (nm) | $\alpha_{DCF}$ (dB/km) | $FOM_{DCF}$ (ps/nm·dB) | $\Gamma$ (dB) | IL (dB) | $A_{eff}$ (μm²) | $n_2$ ($10^{-20}$ m²/W) | NLC ($10^{-4}$ km/W·dB) | CQ (dB) | CQ2 (dB) | COM ($10^{10}$ dB²·W/s) | CRP (%) |
|---|---|---|---|---|---|---|---|---|---|---|---|---|---|---|---|
| N1 | -680 | -115 | -0,75 | 154 | 0,90 | 128 | 0,50 | 6,3 | 15 | 3 | 14,0 | 17,8 | 66,2 | 3,5 | 28,9% |
| N2 | -680 | -160 | -1,04 | 154 | 1,30 | 123 | 0,75 | 7,0 | 15 | 3 | 9,3 | 16,7 | 64,8 | 5,3 | 16,0% |
| N3 | -680 | -220 | -1,43 | 154 | 1,20 | 183 | 0,75 | 5,2 | 15 | 3 | 8,1 | 14,3 | 66,3 | 3,3 | 27,0% |
| N4 | -680 | -300 | -1,95 | 154 | 1,42 | 211 | 0,75 | 4,7 | 14 | 3 | 6,6 | 12,9 | 66,4 | 3,1 | 27,1% |
| N5 | -680 | -300 | -1,95 | 154 | 1,50 | 200 | 0,75 | 4,9 | 14 | 3 | 6,5 | 13,0 | 66,0 | 3,5 | 24,9% |
| B1 | -680 | -230 | -2,20 | 105 | 0,60 | 383 | 0,30 | 2,4 | 19 | 3 | 8,2 | 11,5 | 71,0 | 1,0 | 58,8% |
| B2 | -680 | -175 | -3,19 | 55 | 0,60 | 292 | 0,52 | 3,4 | 15 | 3 | 12,3 | 14,3 | 71,0 | 1,0 | 52,7% |
| B3 | -680 | -145 | -1,38 | 105 | 0,55 | 264 | 0,42 | 3,4 | 15 | 3 | 14,8 | 15,1 | 70,8 | 1,0 | 54,8% |
| B4 | -680 | -170 | -1,62 | 105 | 0,75 | 227 | 0,29 | 3,6 | 19 | 3 | 9,8 | 13,5 | 67,7 | 2,1 | 47,0% |
| C1 | -680 | -85 | -0,71 | 120 | 0,30 | 283 | 0,70 | 3,8 | 19 | 4 | 25,0 | 17,8 | 74,2 | 0,5 | 57,3% |
| C2 | -680 | -145 | -1,38 | 105 | 0,50 | 290 | 0,70 | 3,7 | 15 | 4 | 19,0 | 16,5 | 73,2 | 0,6 | 54,7% |
| C3 | -680 | -230 | -2,55 | 90 | 0,90 | 256 | 0,70 | 4,1 | 14 | 4 | 12,5 | 15,0 | 70,4 | 1,2 | 46,0% |
| C4 | -680 | -145 | -1,45 | 100 | 0,64 | 228 | 0,55 | 4,1 | 18 | 4 | 15,3 | 15,9 | 70,2 | 1,3 | 48,7% |
| C5 | -680 | -290 | -2,90 | 100 | 0,90 | 322 | 0,50 | 3,1 | 15,7 | 4 | 9,7 | 13,0 | 70,7 | 1,1 | 52,1% |
| C6 | -680 | -337 | -3,75 | 90 | 0,85 | 396 | 0,55 | 2,8 | 15 | 4 | 13,8 | 14,2 | 74,0 | 0,8 | 60,4% |
| C7 | -680 | -376 | -3,75 | 100 | 0,94 | 400 | 0,45 | 2,6 | 13,1 | 4 | 9,5 | 12,4 | 72,2 | 0,8 | 58,0% |

FIG_5

EP 1 473 858 B1

FIG_6

FIG_7

FIG_8

EP 1 473 858 B1

FIG_9

FIG_10